# EUROPEAN PATENT SPECIFICATION

(11) **EP 3 190 005 B1**
(45) Date of publication and mention of the grant of the patent: **10.11.2021**
(21) Application number: 16207093.2
(22) Date of filing: 28.12.2016
(51) Int. Cl.: B60Q 1/08, B60Q 1/14, B60Q 1/26, B60Q 1/46, B60Q 1/52, B60Q 5/00, B60Q 9/00, F21S 43/145, F21Y 115/10, F21Y 113/00

(54) **LAMP FOR VEHICLE, AND VEHICLE INCLUDING THE SAME**
LAMPE FÜR EIN FAHRZEUG UND FAHRZEUG DAMIT
PHARE DE VÉHICULE ET VÉHICULE LE COMPRENANT

(30) Priority: 06.01.2016 KR 20160001375
(43) Date of publication of application: 12.07.2017
(73) Proprietor: ZKW Group GmbH, 3250 Wieselburg (AT)
(72) Inventor: NA, Taeyoung, 07336 Seoul (KR); KIM, Ana, 07336 Seoul (KR)
(74) Representative: Patentanwaltskanzlei Matschnig & Forsthuber OG

(56) References cited:
- EP-A1- 2 263 915
- EP-A1- 2 390 135
- EP-A1- 3 141 427
- DE-A1-102011 076 330
- DE-A1-102011 119 558
- DE-A1-102013 217 848
- DE-A1-102013 223 717
- DE-A1-102014 110 776
- DE-U1-202015 100 207
- US-A1- 2002 101 356
- US-A1- 2005 062 597
- US-A1- 2006 133 103
- US-A1- 2008 111 673
- US-A1- 2014 056 020
- US-A1- 2015 137 965
- US-B1- 9 187 031

## Description

### CROSS-REFERENCE TO RELATED APPLICATIONS

This application claims an earlier filing date and right of priority to Korean Patent Application No. 10-2016-0001375, filed on January 6, 2016 in the Korean Intellectual Property Office.

### TECHNICAL FIELD

The present disclosure relates to a lamp for a vehicle, and a vehicle including the same.

### BACKGROUND

A vehicle is a device that carries a passenger in an intended direction. A car is an example of a vehicle.

A vehicle is typically equipped with various types of lighting devices such as lamps. For example, the lamps may include a headlamp, a turn signal lamp, etc.

As an example, prior art related to a lamp for a vehicle is disclosed in the following patent documents: German Patent Application Publication No. 10 2014110776 A1; U.S. Patent Application Publication No. 2015/137965 A1; U.S. Patent Application Publication No. 2008/111673 A1; U.S. Patent No. 9 187 031 B1; U.S. Patent Application Publication No. 2006/133103 A1; European Patent Application Publication No. 2 390 135 A1; European Patent Application Publication No. 2 263 915 A1; German Patent Application Publication No. 10 2011 119558 A1; U.S. Patent Application Publication No. 2002/101356 A1; U.S. Patent Application Publication No. 2005/062597 A1; and German Patent Application Publication No. 10 2013 217848 A1; and DE 20 2015 100 207 U1.

### SUMMARY

Systems and techniques are disclosed that enable a vehicle lamp to adaptively partition a light emitting region of the lamp into different light emitting areas, and control a sequential turning-on operation and sequential turning-off operation of the light emitting areas based on a user's operation of the vehicle.

The invention is defined in claim 1. Preferred embodiments are defined in the dependent claims.

Part of the features described throughout this disclosure may be implemented as a computer program product including instructions that are stored on one or more non-transitory machine-readable storage media, and that are executable on one or more processing devices. Part of the features described throughout this disclosure can be implemented as an apparatus, method, or electronic system that can include one or more processing devices and memory to store executable instructions to implement the stated functions

The details of one or more implementations are set forth in the accompanying drawings and the description below. Other features will be apparent from the description and drawings, and from the claims. The description and specific examples below are given by way of illustration only, and various changes and modifications will be apparent.

### BRIEF DESCRIPTION OF THE DRAWINGS

FIG. 1 is a diagram illustrating an example of an exterior of a vehicle according to an implementation;
FIG. 2 is a diagram illustrating an example of an exterior of a vehicle, as viewed from behind the vehicle according to an implementation;
FIG. 3A is a block diagram illustrating an example of a lamp for a vehicle according to an implementation;
FIG. 3B is a block diagram illustrating an example of a lamp for a vehicle according to an implementation;
FIG. 4 is a block diagram illustrating an example of a vehicle according to an implementation;
FIGS. 5A, 5B, and 5C are diagrams illustrating examples of an optical output unit according to an implementation;
FIG. 6 is a diagram illustrating an example of an operation of turning on and turning off a lamp for a vehicle according to an implementation;
FIG. 7 is a diagram illustrating an example of an operation of controlling a size of each of a plurality of light emitting areas to be different during sequential turn-on functions according to an implementation;
FIG. 8 is a diagram illustrating an example of an operation of controlling a size of each of a plurality of light emitting areas to be different during sequential turn-off functions according to an implementation;
FIG. 9 is a diagram illustrating an example of an operation of receiving traveling environment information according to an implementation;
FIGS. 10 and 11 are diagrams illustrating examples of an operation of a lamp for a vehicle, when an input for operating an emergency lamp is received during sequential turn-on functions of a plurality of light emitting areas according to an implementation;
FIGS. 12, 13A, and 13B are diagrams illustrating examples of an operation of a lamp for a vehicle, when a turn signal input is received during sequential turn-on functions of a plurality of first light emitting areas according to an implementation;
FIGS. 14A and 14B are diagrams illustrating examples of emergency lamp operation patterns according to an implementation;
FIGS. 15 to 20 are diagrams illustrating examples of an operation of a lamp for a vehicle, when an input for operating an emergency lamp is received according to an implementation;
FIGS. 21A and 21B are diagrams illustrating examples of an operation of a lamp for a vehicle according to an implementation; and
FIG. 22 is a diagram illustrating an example of an operation for setting a lamp for a vehicle according to an implementation.

### DETAILED DESCRIPTION

Vehicle lamps typically illuminate in specific driving situations to alert other drivers or pedestrians. For example, a tail lamp flashes at night, a brake lamp flashes when a vehicle performs a braking operation, and a turn signal lamp blinks at predetermined time intervals to indicate that the driver of a vehicle will turn to the right or to the left or change lanes.

However, vehicle lamps can sometimes suffer from low visibility to other drivers or pedestrians, resulting in decreased effectiveness of the lamps. In addition, a vehicle lamp is typically fixed in a specific configuration of functionality, such that specific light sources are fixed to perform specific lighting functions.

Disclosed herein is a lamp for a vehicle that is configured to be adaptively controlled to sequentially turn-on or sequential turn-off a plurality of light emitting areas in the vehicle. The specific partitioning of the light emitting area of a lamp into different light emitting areas may be determined in an adaptive manner, thus enabling adaptive control of different lighting functions of the vehicle.

In some implementations, the light emitting areas may be turned on or off in a sequential manner, providing increased visibility for different indicators. In addition, the entire plurality of light emitting areas may be jointly turned on and off in a blinking manner to further improve visibility of a signal.

In concept, the term vehicle as used in the present disclosure may cover car and motor cycle. The following description will be given in the context of a car as a vehicle, by way of example.

In the present invention, a vehicle may be any of an internal combustion vehicle equipped with an engine as a power source, a hybrid vehicle equipped with an engine and an electrical motor as power sources, an electric vehicle equipped with an electrical motor as a power source, and the like.

In the present invention, a vehicle may be a self-driving vehicle.

In the following description, the left of a vehicle means a left side with respect to a traveling direction, and the right of the vehicle means a right side with respect to the traveling direction.

In the following description, front or ahead means a straight forward traveling direction of the vehicle, and rear or reverse means a backward traveling direction of the vehicle.

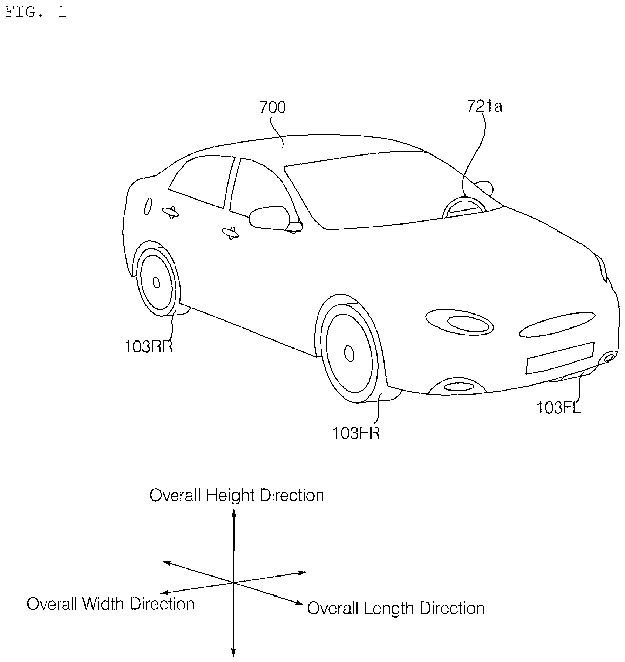

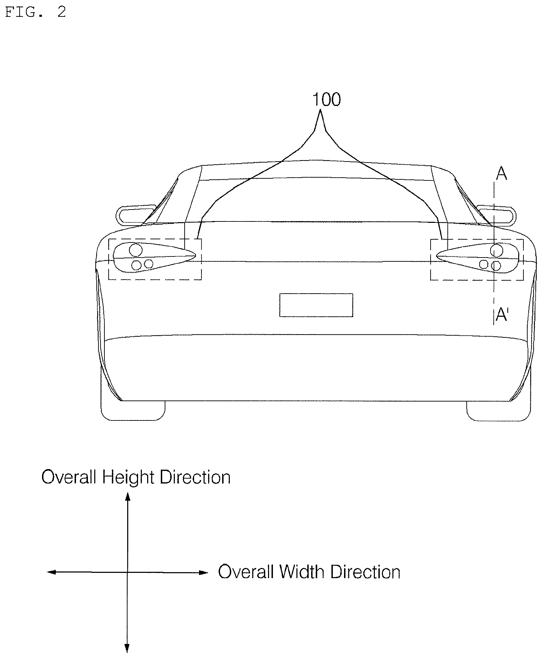

FIG. 1 is a view illustrating the exterior of a vehicle according to an implementation, and FIG. 2 is a view illustrating the exterior of the vehicle, as viewed from behind the vehicle according to an implementation.

Referring to FIGS. 1 and 2, a vehicle 700 may include wheels 103FR, 103FL, 103RR... that are rotated by a power source, a steering input device 721a, and a lamp 100 for a vehicle (hereinafter, referred to as a vehicle lamp 100).

According to an implementation, the vehicle lamp 100 may be a headlamp or a rear combination lamp.

While the following description is provided in the context of a rear combination lamp as the vehicle lamp 100, implementations are not limited thereto and other types of vehicle lamps may be implemented, such as a headlamp.

The vehicle lamp 100 includes any lamp attached onto the rear side of the vehicle 700. The vehicle lamp 100 may include at least one of a brake lamp, a tail lamp, a turn signal lamp, a fog lamp, a position lamp, and a back lamp.

An overall length refers to a length from the front side to the rear side of the vehicle 700, an overall width refers to a width of the vehicle 700, and an overall height refers to a length from the bottom of a wheel to the roof of the vehicle 700. In the following description, an overall length direction L may mean a direction based on which the overall length of the vehicle 700 is measured, an overall width direction W may mean a direction based on which the overall width of the vehicle 700 is measured, and an overall height direction H may mean a direction based on which the overall height of the vehicle 700 is measured.

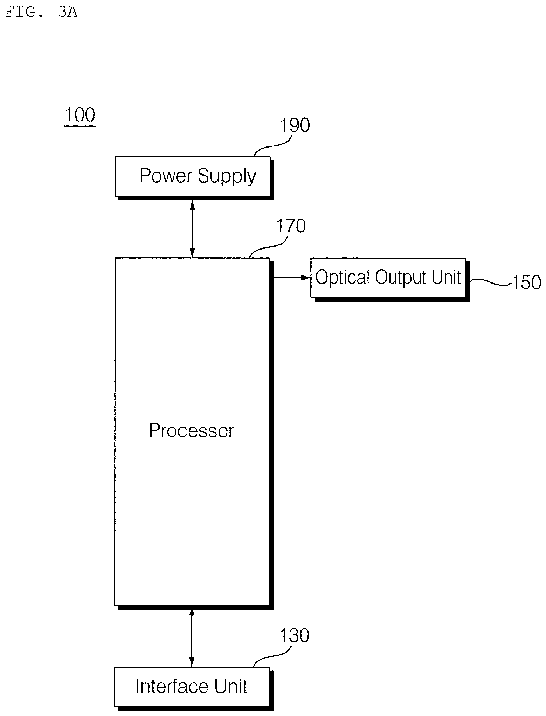

FIG. 3A is a block diagram of a vehicle lamp according to an implementation.

Referring to FIG. 3A, the vehicle lamp 100 according to the implementation may include an interface unit 130, an optical output unit 150, a processor 170, and a power supply 190.

The interface unit 130 may exchange data with a controller 770, a sensing unit 760, a camera 200, or a display device 400 of the vehicle 700.

The interface unit 130 may receive data, information, or a signal, or transmit data, information, or a signal processed or generated by the processor 170 to the outside. For this purpose, the interface unit 130 may conduct data communication with the controller 770, the sensing unit 760, the camera 200, and the display device 400 of the vehicle 700 in a wired or wireless communication scheme.

Meanwhile, the interface unit 130 may receive sensor information from the controller 770 or the sensing unit 760.

The sensor information may include at least one of vehicle heading information, vehicle location information (Global Positioning System (GPS) information), vehicle angle information, vehicle speed information, vehicle acceleration information, vehicle inclination information, vehicle forwarding/backwarding information, battery information, fuel information, tire information, vehicle lamp information, vehicle internal temperature information, vehicle internal humidity information, and vehicle ambient illumination intensity information.

The sensor information may be acquired from a heading sensor, a yaw sensor, a gyro sensor, a position module, a vehicle forwarding/backwarding sensor, a wheel sensor, a vehicle speed sensor, a vehicle body inclination sensor, a battery sensor, a fuel sensor, a tire sensor, a hand rotation-based steering sensor, a vehicle internal temperature sensor, a vehicle internal humidity sensor, an illumination sensor, etc. The position module may include a GPS module for receiving GPS information.

Among the sensor information, the vehicle heading information, the vehicle location information, the vehicle angle information, the vehicle speed information, the vehicle inclination information, etc. which are related to traveling of the vehicle may be referred to as vehicle traveling information.

The interface unit 130 may receive object information from the camera 200.

The camera 200 may perform Lane Detection (LD), Vehicle Detection (VD), Pedestrian Detection (PD), Brightspot Detection (BD), Traffic Sign Recognition (TSR), and road surface detection, based on an acquired image.

The interface unit 130 may receive navigation information from the display device 400 or a separate navigation device through data communication. The navigation information may include information about a destination that has been set, information about a route to the destination, map information related to vehicle traveling, and information about a current location of the vehicle. Meanwhile, the navigation information may include information about a location of the vehicle on a road.

The interface unit 130 may receive ambient traveling information from the communication unit 710, the sensing unit 760, or the camera 200.

The ambient traveling information may include object information, weather information, traveling road information, traveling time information, and illumination intensity information. Meanwhile, the object information may include information about the presence or absence of an object, information about a location of the object, information about a distance to the object, and information about a relative speed of the object.

The optical output unit 150 generate light and output the light to the outside. The optical output unit 150 include a light source.

The optical output unit 150 includes a surface light source. The surface light source includes an Organic Light Emitting Diode (OLED).

For example, the surface light source may include a Flexible OLED (F-OLED). Although the F-OLED adopts an OLED light emitting surface, the F-OLED is bendable to one side or the other side and thus its shape may be flexibly changed.

The surface light source preferably includes a Plastic OLED (P-OLED) from among various F-OLED types. Since the P-OLED adopts a Direct Current (DC) driving scheme, it does not need an inverter, thus generating no noise. The P-OLED is advantageously bendable due to use of an Indium Tin Oxide (ITO) film such as an inorganic ElectroLuminiscent (EL) film as a base film, while having the properties of a high brightness level (equal to or greater than 250 cd/m2) and a long lifetime (for example 10,000 hours or more).

Further, the P-OLED allows partial change of a light intensity on a light emitting surface as well as free control of an overall light intensity. The whole or part of the color of the P-OLED may be changed. The shape of the P-OLED may be changed wholly or partially according to movement of a bracket supporting the P-OLED.

The optical output unit 150 may include a plurality of surface light sources. Each of the surface light sources includes an OLED. For example, each of the surface light sources may include an F-OLED. Preferably, each of the surface light sources may include a P-OLED.

The optical output unit 150 may include a plurality of light emitting devices. Each of the light emitting devices may be at least one of a metal filament lamp, a halogen bulb, a High Intensity Discharge (HID) lamp, a neon gas discharge lamp, a Light Emitting Diode (LED), and a laser diode. Preferably, the light emitting device includes an LED.

The optical output unit 150 may include a first optical output unit and a second optical output unit. The first optical output unit may operate as a left-side rear combination lamp of the vehicle 700, and the second optical output unit may operate as a right-side rear combination lamp of the vehicle 700.

The processor 170 may provide overall control to each unit of the vehicle lamp 100. The processor 170 may be electrically connected to each unit of the vehicle lamp 100.

The processor 170 determines a partitioning of a light emitting area of the optical output unit into a plurality of light emitting areas.

The processor 170 controls a sequential turn-on operation that turns on the plurality of light emitting areas in a first sequential order in a first color.

The processor 170 may control a sequential turn-off operation that turns off the plurality of light emitting areas in a second sequential order.

The processor 170 may divide an optical output unit into a plurality of light emitting areas. The processor 170 may control sequential turn-on of the plurality of light emitting areas in a first color and sequential turn-off of the plurality of light emitting areas.

The processor 170 may control sequential turn-on of the plurality of light emitting areas in the first color during a predetermined period. The period may be a time taken to illuminate all of the light emitting areas all of which have been turned off. For example, the period may be equal to or larger than 100ms and equal to or smaller than 200ms. Since the period is set in consideration of blinking of the human eyes in this manner, a third party viewing the vehicle lamp 100 recognizes a signal clearly.

The processor 170 may control sequential turn-off of the plurality of light emitting areas during a predetermined period. The period may be a time taken to turn off all of the light emitting areas all of which are flashing. For example, the period may be equal to or larger than 100ms and equal to or smaller than 200ms. Since the period is set in consideration of blinking of the human eyes in this manner, the third party viewing the vehicle lamp 100 recognizes a signal clearly.

If all of the plurality of light emitting areas emit light, the processor 170 may control the intensity of the light to be equal to or larger than 130cd and to be equal to or less than 750cd. Since the light intensity is controlled in this manner, the third party viewing the vehicle lamp 100 recognizes a signal clearly without any inconvenience to the eyes of the third party.

The first color may be, but not limited to, amber or red. The first color may be determined according to a road traffic rule.

Meanwhile, the plurality of light emitting areas may serve as a turn signal lamp.

Each of the plurality of light emitting areas may comprise a respective region of the surface light source.

The optical output unit 150 includes a surface light source, each of the light emitting areas may include an area of the surface light source. The surface light source includes an OLED (for example, a P-OLED). The processor 170 may control the light intensity of an area of the surface light source except for the light emitting areas in correspondence with sequential turn-on or sequential turn-off of the light emitting diodes.

If the optical output unit 150 operates as a rear combination lamp, the range of intensity levels of light output from the rear combination lamp is regulated by a rule. As the plurality of light emitting areas are sequentially turned on and sequentially turned off, the overall light intensity of the optical output unit 150 may not be constant. In this case, the problem may be averted by controlling the light intensity of the area of the surface light source except for the light emitting areas in correspondence with sequential turn-on or turn-off of each light emitting area.

The optical output unit 150 includes a surface light source, the processor 170 divide the surface light source into a plurality of areas. The processor 170 may control different subsets of the plurality of areas to operate as a brake lamp, a tail lamp, a turn signal lamp, a fog lamp, a position lamp, or a back lamp. In some implementations, the processor 170 may control the light emitting areas to operate collectively as a turn signal lamp.

If the optical output unit 150 includes a plurality of surface light sources, each of the plurality of light emitting areas may include an area of at least one surface light source. Herein, each surface light source may include an OLED (for example, a P-OLED).

If the optical output unit 150 includes a plurality of light emitting devices, each of the light emitting areas may include at least one of the light emitting devices. Herein, a light emitting device may include an LED.

When the plurality of light emitting areas are sequentially turned on in the first color, the processor 170 control the size of each of the flashing light emitting areas to be different.

For example, if the plurality of light emitting areas are sequentially turned on in the first color, the processor 170 control the size of each of the flashing light emitting areas to increase or decrease gradually.

Since the sizes of the plurality of light emitting areas are controlled to be different during turn-on, the light emitting areas may flash more visibly and the third party viewing the lamp may recognize whether the lamp flashes on or off more clearly.

If the plurality of light emitting areas are turned off sequentially, the processor 170 may control the size of each of the turned-off light emitting areas to be different.

For example, if the plurality of light emitting areas are turned off sequentially, the processor 170 may control the size of each of the turned-off light emitting areas to increase or decrease gradually.

Since the sizes of the plurality of light emitting areas are controlled to be different during turn-off, the light emitting areas may be turned off more visibly and the third party viewing the lamp may recognize whether the lamp flashes on or off more clearly.

The processor 170 may receive traveling environment information from the interface unit 130. The traveling environment information may include object information, weather information, traveling road information, traveling time information, and illumination intensity information. Meanwhile, the object information may include information about the presence or absence of an object, information about a location of the object, information about a distance to the object, and information about a relative speed of the object.

The processor 170 may control the intensity of light output from the optical output unit 150 according to the traveling environment information.

The processor 170 may control the intensity of light output from the optical output unit 150 to be greater in the daytime than at night. The daytime and the night are determined based on illumination intensity information sensed through an illumination sensor.

The processor 170 may control the optical output unit 150 to control the intensity of light output from a display in correspondence with weather information. The processor 170 may receive the weather information through the interface unit 130. The weather information may be detected by any suitable device, for example by a vehicle driving auxiliary device. Alternatively, the weather information may be received through the communication unit 710 of the vehicle.

The processor 170 may control the intensity of light output from the optical output unit 150 according to illumination intensity information received through the interface unit 130.

The processor 170 may receive information about a distance to a following vehicle through the interface unit 130. The information about the distance to the following vehicle may be detected by the camera 200.

The processor 170 may control the intensity of light generated from the optical output unit 150 based on the information about the distance to the following vehicle. For example, the processor 170 may control the light intensity in proportion to the distance to the following vehicle. For example, as the following vehicle is closer to the vehicle 700, the processor 170 may control the light intensity to decrease. For example, as the vehicle 700 is farther from the following vehicle, the processor 170 may control the light intensity to increase.

The processor 170 may control the intensity of light generated from the optical output unit 150 based on the information about the distance to the following vehicle.

The processor 170 may receive information about a location of a traveling road through the interface unit 130. The processor 170 may control the optical output unit 150 to conform to a traffic rule applied to the traveling road.

The processor 170 may control a period during which the plurality of light emitting areas are sequentially turned on or a period during which the plurality of light emitting areas are sequentially turned off, according to traveling environment information.

Meanwhile, the optical output unit 150 may include the first output unit and the second output unit. In this case, the processor 170 may control the first output unit and the second output unit. Hereinbelow, a description will be given of the processor 170 that controls the first output unit and the second output unit. Unless otherwise stated, the above-described operation of the processor 170 may also be performed for controlling the first output unit and the second output unit.

The processor 170 may determine a partitioning of a light emitting area of the first optical output unit into a plurality of first light emitting areas.

The processor 170 may control a sequential turn-on operation that turns on the plurality of first light emitting areas in first a sequential order in a first color, and a sequential turn-off operation that turns off the plurality of first light emitting areas in a second sequential order.

The processor 170 may determine a partitioning of the light emitting area of the second optical output unit into a plurality of second light emitting areas.

The processor 170 may control a sequential turn-on operation that turns on the plurality of second light emitting areas in a third sequential order in the first color, and a sequential turn-off operation that turns off the plurality of second light emitting areas in a fourth sequential order.

The processor 170 may divide the first output unit into a plurality of first light emitting areas. The processor 170 may control sequential turn-on of the plurality of first light emitting areas in the first color and sequential turn-off of the plurality of first light emitting areas.

The processor 170 may divide the second output unit into a plurality of second light emitting areas. The processor 170 may control sequential turn-on of the plurality of second light emitting areas in the first color and sequential turn-off of the plurality of second light emitting areas.

The processor 170 may be under control of the controller 770.

The processor 170 may be implemented in hardware using at least one of an Application Specific Integrated Circuits (ASIC), a Digital Signal Processor (DSP), a Digital Signal Processing Device (DSPD), a Programmable Logic Device (PLD), a Field Programmable Gate Array (FPGA), a processor, a controller, a micro-controller, a microprocessor, and an electrical unit for executing other functions.

The power supply 190 may supply power needed for operating each unit under the control of the processor 170. Particularly, the power supply 190 may receive power from a battery within the vehicle 700.

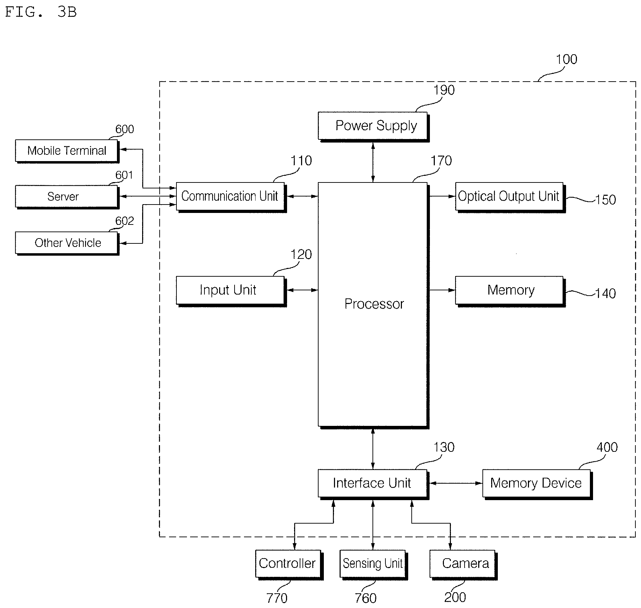

FIG. 3B is a block diagram of a vehicle lamp according to an implementation.

Referring to FIG. 3B, the vehicle lamp 100 may further include a communication unit 110, an input unit 120, and a memory 140, in addition to the interface unit 130, the optical output unit 150, the processor 170, and the power supply 190.

The communication unit 110 may include one or more communication modules that enable wireless communication with an external device. In addition, the communication unit 110 may include one or more communication modules that connect the vehicle lamp 100 to one or more networks. The communication unit 110 may exchange data with an external device. The external device may be a mobile terminal 600, an external server 601, or another vehicle 602.

The input unit 120 may include an input means capable of receiving a user input for controlling an operation of the vehicle lamp 100. The input unit 120 may reside inside the vehicle 700. The input unit 120 may include a touch input means, a mechanical input means, or a voice input means. The input unit 120 may receive a user input for controlling various operations of the vehicle lamp 100.

The input unit 120 may receive a turn signal input.

The input unit 120 may receive an input for operating an emergency lamp.

The memory 140 may store basic data for each unit of the vehicle lamp 100, control data for controlling an operation of each unit, and data input to and output from the vehicle lamp 100.

The memory 140 may be implemented as various storage devices in hardware, including Read Only Memory (ROM), Random Access Memory (RAM), Erasable Programmable ROM (EPROM), flash drive, hard drive, etc.

The memory 140 may store various data needed for overall operations of the vehicle lamp 100, including programs for processing or controlling in the processor 170.

The memory 140 may be incorporated into the processor 170.

The processor 170 may control the optical output unit 150 according to an input received through the input unit 120.

Upon receipt of an input for operating an emergency lamp through the input unit 120, the processor 170 may control blinking of all of the plurality of light emitting areas, after elapse of the period of sequentially turning on the plurality of light emitting areas in the first color or the period of sequentially turning off the plurality of light emitting areas.

Upon receipt of an input for operating an emergency lamp through the input unit 120, the processor 170 may control blinking of all of the plurality of light emitting areas at a time of receiving the input.

Meanwhile, the optical output unit 150 may include the first output unit and the second output unit. In this case, the processor 170 may control the first output unit and the second output unit. Hereinbelow, a description will be given of the processor 170 that controls the first output unit and the second output unit. Unless otherwise stated, the above-described operation of the processor may also be performed for controlling the first output unit and the second output unit.

The processor 170 may divide the first output unit into a plurality of first light emitting areas. The processor 170 may control sequential turn-on of the plurality of first light emitting areas in the first color and sequential turn-off of the plurality of first light emitting areas.

The processor 170 may divide the second output unit into a plurality of second light emitting areas. The processor 170 may control sequential turn-on of the plurality of second light emitting areas in the first color and sequential turn-off of the plurality of second light emitting areas.

During sequential turn-on of the plurality of first light emitting areas, the processor 170 may receive an input for operating an emergency lamp through the input unit 120. In this case, in the state where the plurality of first light emitting areas are sequentially turned on and thus are all flashing, the processor 170 may control blinking of all of the first and second light emitting areas at once.

During sequential turn-on of the plurality of first light emitting areas, the processor 170 may receive an input for operating an emergency lamp through the input unit 120. In this case, the processor 170 may continue the sequential turn-on of the first light emitting areas, and control turn-on of all of the second light emitting areas, at a time of receiving the input. If the plurality of first light emitting areas are sequentially turned on and thus are all flashing, the processor 170 may control blinking of all of the first and second light emitting areas at once.

During sequential turn-on of the plurality of first light emitting areas, the processor 170 may receive an input for operating an emergency lamp through the input unit 120. In this case, the processor 170 may control blinking of all of the first and second light emitting areas at once, at a time of receiving the input.

During sequential turn-off of the plurality of first light emitting areas, the processor 170 may receive an input for operating an emergency lamp through the input unit 120. In this case, in the state where the plurality of first light emitting areas are sequentially turned off and thus are all off, the processor 170 may control blinking of all of the first light emitting areas and the second light emitting areas at once.

During sequential turn-off of the plurality of first light emitting areas, the processor 170 may receive an input for operating an emergency lamp through the input unit 120. In this case, the processor 170 may continue the sequential turn-off of the first light emitting areas, and control turn-on of all of the second light emitting areas, at a time of receiving the input. If the plurality of first light emitting areas are sequentially turned off and thus are all off, the processor 170 may control blinking of all of the first and second light emitting areas at once.

During sequential turn-off of the plurality of first light emitting areas, the processor 170 may receive an input for operating an emergency lamp through the input unit 120. In this case, the processor 170 may control blinking of all of the first and second light emitting areas at once, at a time of receiving the input.

Meanwhile, the first optical output unit may include a first surface light source. In this case, each of the first light emitting areas may include an area of the first surface light source.

The second optical output unit may include a second surface light source. In this case, each of the second light emitting areas may include an area of the second surface light source.

If the first light emitting areas or the second light emitting areas are sequentially turned on or sequentially turned off, the intensity of light output from the second surface light source may be controlled to match the intensity of light output from the first surface light source.

Therefore, the intensities of light output from the left-side and right-side rear combination lamps of the vehicle are maintained constant with respect to each other, thereby achieving balancing between the left-side and right-side rear combination lamps.

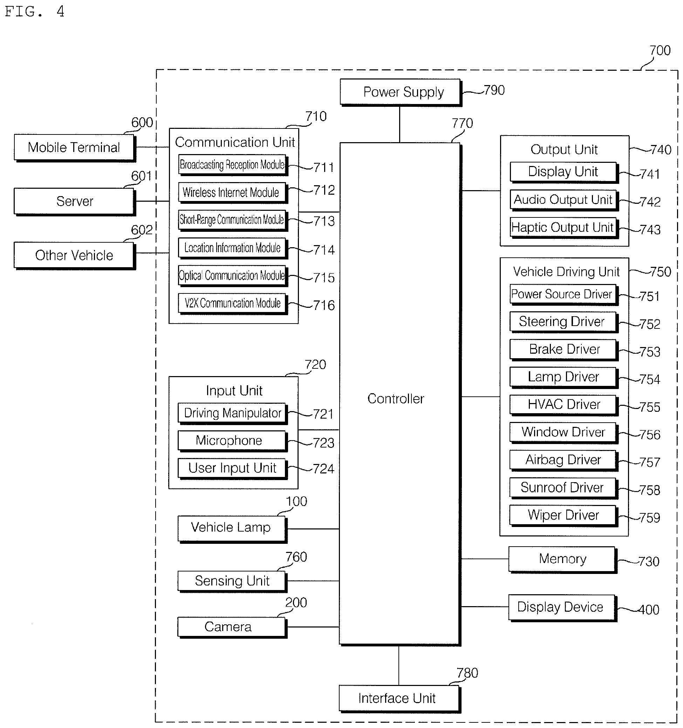

FIG. 4 is a block diagram of a vehicle according to an implementation.

Referring to FIG. 4, the vehicle 700 may include a communication unit 710, an input unit 720, a sensing unit 760, an output unit 740, a vehicle driving unit 750, a memory 730, an interface unit 780, a controller 770, a power supply 790, a vehicle lamp 100, a camera 200, and an in-vehicle display device 400.

The communication unit 710 may include one or more modules that enable wireless communication between the vehicle 700 and the mobile terminal 600, between the vehicle 700 and the external server 601, or between the vehicle 700 and another vehicle 602. In addition, the communication unit 710 may include one or more modules that connect the vehicle 700 to one or more networks.

The communication unit 710 may include a broadcasting reception module 711, a wireless Internet module 712, a short-range communication module 713, a location information module 714, an optical communication module 715, and a Vehicle to X (V2X) communication module 716.

The broadcasting reception module 711 receives a broadcast signal or broadcasting information from an external broadcasting management server through a broadcast channel. Herein, broadcasting covers radio broadcasting or TV broadcasting.

The wireless Internet module 712 refers to a module for wireless Internet connectivity, and may reside inside or outside the vehicle 700. The wireless Internet module 712 is configured to transmit and receive wireless signals over a communication network compliant with a wireless Internet technique.

Wireless Internet techniques include, for example, Wireless Local Area Network (WLAN), Wireless Fidelity (WiFi) Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), Long Term Evolution-Advanced (LTE-A), etc. The wireless Internet module 712 transmits and receives data according to at least one of wireless Internet techniques that include other Internet techniques in addition to the above-enumerated ones. For example, the wireless Internet module 712 may exchange data wirelessly with the external server 601. The wireless Internet module 712 may receive weather information and traffic information (for example, Transport Protocol Expert Group (TPEG) information) from the external server 601.

The short-range communication module 713 is used for short-range communication. The short-range communication module 713 may support short-range communication using at least one of Bluetooth, Radio Frequency Identification (RFID), Infrared Data Association (IrDA), Ultra Wideband (UWB), ZigBee, Near Field Communication (NFC), WiFi, WiFi Direct, Wireless Universal Serial Bus (Wireless USB).

The short-range communication module 713 may conduct short-range communication between the vehicle 700 and at least one external device by establishing a short-range wireless communication network. For example, the short-range communication module 713 may exchange data wirelessly with the mobile terminal 600. The short-range communication module 713 may receive weather information and traffic information (for example, TPEG information) from the mobile terminal 600. For example, if a user is aboard the vehicle 700, the mobile terminal 600 of the user and the vehicle 700 may be paired with each other automatically or upon execution of an application by the user.

The location information module 714 is a module configured to acquire a location of the vehicle 700. A major example of the location information module 714 is a GPS module. For example, the location of the vehicle 700 may be acquired using signals received from GPS satellites at the GPS module.

The optical communication module 715 may include an optical transmitter and an optical receiver.

The optical receiver may receive information by converting an optical signal to an electrical signal. The optical receiver may include a Photo Diode (PD) for receiving light. The PD may convert light to an electrical signal. For example, the optical receiver may receive information about a preceding vehicle by light emitted from a light source included in the preceding vehicle.

The optical transmitter may include at least one light emitting device for converting an electrical signal to an optical signal. The light emitting device is preferably an LED. The optical transmitter converts an electrical signal to an optical signal and outputs the optical signal to the outside. For example, the optical transmitter may emit an optical signal to the outside by flickering a light emitting device corresponding to a predetermined frequency. According to an implementation, the optical transmitter may include a plurality of light emitting device arrays. According to an implementation, the optical transmitter may be integrated with a lamp provided in the vehicle 700. For example, the optical transmitter may be at least one of a headlamp, a tail lamp, a brake lamp, a turn signal lamp, and a position lamp. For example, the optical communication module 715 may exchange data with another vehicle 602 by optical communication.

The V2X communication module 716 is a module configured for wireless communication with the server 601 or another vehicle 602. The V2X communication module 716 includes a module capable of implementing a Vehicle-to-Vehicle (V2V) or Vehicle-to-Infrastructure (V2I) protocol. The vehicle 700 may conduct wireless communication with the external server 601 and another vehicle 602 through the V2X communication module 716.

The input unit 720 may include a driving manipulator 721, a microphone 723, and a user input unit 724.

The driving manipulator 721 receives a user input for driving the vehicle 700. The driving manipulator 721 may include a steering input device, a shift input device, an acceleration input device, and a brake input device.

The steering input device receives a traveling heading input for the vehicle 700 from the user. The steering input device is preferably formed into a wheel so that a steering input may be applied by rotation. According to an implementation, the steering input device may be configured as a touch screen, a touchpad, or a button.

The shift input device receives a parking (P) input, a drive (D) input, a neutral (N) input, and a reverse (R) input for the vehicle 700 from the user. The shift input device is preferably formed into a lever. According to an implementation, the shift input device may be configured as a touch screen, a touchpad, or a button.

The acceleration input device receives an acceleration input for the vehicle 700 from the user. The brake input device receives a deceleration input for the vehicle 700 from the user. The acceleration input device and the brake input device are preferably formed into pedals. According to an implementation, the acceleration input device or the brake input device may be configured as a touch screen, a touchpad, or a button.

The microphone 723 may process an external sound signal to electrical data. The processed data may be used in various manners according to a function being executed in the vehicle 700. The microphone 723 may convert a voice command of the user to electrical data. The converted electrical data may be provided to the controller 770.

Meanwhile, according to an implementation, the camera 200 or the microphone 723 may be included in the sensing unit 760, instead of the input unit 720.

The user input unit 724 is configured to receive information from the user. Upon input of information through the user input unit 724, the controller 770 may control an operation of the vehicle 700 in correspondence with the input information. The user input unit 724 may include a touch input means or a mechanical input means. According to an implementation, the user input unit 724 may be disposed in an area of the steering wheel. In this case, the driver may manipulate the user input unit 724 with his or her finger, while grabbing the steering wheel.

The sensing unit 760 senses a signal related to traveling of the vehicle 700. For this purpose, the sensing unit 760 may include a collision sensor, a wheel sensor, a speed sensor, an inclination sensor, a weight sensor, a heading sensor, a yaw sensor, a gyro sensor, a position module, a vehicle forwarding/backwarding sensor, a battery sensor, a fuel sensor, a tire sensor, a hand rotation-based steering sensor, a vehicle internal temperature sensor, a vehicle internal humidity sensor, a rain sensor, an ultrasonic sensor, a radar, a Light Detection And Ranging (LiDAR), etc.

Accordingly, the sensing unit 760 may acquire sensing signals for vehicle collision information, vehicle heading information, vehicle location information (GPS information), vehicle angle information, vehicle speed information, vehicle acceleration information, vehicle inclination information, vehicle forwarding/backwarding information, battery information, fuel information, tire information, vehicle lamp information, vehicle internal temperature information, vehicle internal humidity information, information indicating whether it is raining, a steering wheel rotation angle, etc.

Meanwhile, the sensing unit 760 may further include an acceleration pedal sensor, a pressure sensor, an engine speed sensor, an Air Flow Sensor (AFS), an Air Temperature Sensor (ATS), a Water Temperature Sensor (WTS), a Throttle Position Sensor (TPS), a Top Dead Center (TDC) sensor, a Crank Angle Sensor (CAS), etc.

The sensing unit 760 may include a biometric sensing unit. The biometric sensing unit senses and acquires biometric information about a passenger. The biometric information may include finger print information, iris scan information, retina scan information, hand geometry information, facial recognition information, and voice recognition information. The biometric sensing unit may include a sensor for sensing biometric information about a passenger. Herein, an internal camera and the microphone 723 may operate as sensors. The biometric sensing unit may acquire hand geometry information and facial recognition information through the internal camera.

The output unit 740 is configured to output information processed by the controller 770. The output unit 740 may include a display unit 741, an audio output unit 742, and a haptic output unit 743.

The display unit 741 may display information processed by the controller 770. For example, the display unit 741 may display vehicle-related information. The vehicle-related information may include vehicle control information for direct control of the vehicle or vehicle driving assist information for guiding driving of the driver. In addition, the vehicle-related information may include vehicle state information indicting the current state of the vehicle or vehicle traveling information related to traveling of the vehicle.

The display unit 741 may include at least one of a Liquid Crystal Display (LCD), a Thin Film Transistor-Liquid Crystal Display (TFT LCD), an OLED, a flexible display, a Three-Dimensional (3D) display, and an e-ink display.

The display unit 741 may be configured as a touch screen by forming a mutual layer structure with a touch sensor or being integrated with the touch sensor. The touch screen may serve as an output interface between the vehicle 700 and the user as well as as the user input unit 724 that provides an input interface between the vehicle 700 and the user. In this case, the display unit 741 may include a touch sensor for sensing a touch on the display unit 741 in order to receive a control command in a touch manner. Thus, when the display unit 741 is touched, the touch sensor may sense the touch, and thus the controller 770 may generate a control command corresponding to the touch. Content input by a touch may be a character, a number, or an indication or selectable menu item in various modes.

Meanwhile, the display unit 741 may include a cluster so that the driver may check the vehicle state information or the vehicle traveling information, while driving the vehicle 700. The cluster may be positioned on the dashboard. In this case, the driver may view information displayed on the cluster, while gazing ahead of the vehicle 700.

According to an implementation, the display unit 741 may be configured as a Heads Up Display (HUD). If the display unit 151 is configured as a HUD, the display unit 151 may output information through a transparent display provided on a windshield. Alternatively, the display unit 741 may include a projection module and thus output information by an image projected onto the windshield.

The audio output unit 742 converts an electrical signal received from the controller 770 to an audio signal. For this purpose, the audio output unit 742 may include a speaker. The audio output unit 742 may output a sound corresponding to an operation of the user input unit 724.

The haptic output unit 743 generates a haptic output. For example, the haptic output unit 743 may vibrate the steering wheel, a safety belt, or a seat so that the user may recognize an output.

The vehicle-driving unit 750 may control an operation of various devices of the vehicle. The vehicle-driving unit 750 may receive a control signal from an around-view providing apparatus, for example an around-view camera. The vehicle-driving unit 750 may control each device based on the control signal.

The vehicle-driving unit 750 may include a power source driver 751, a steering driver 752, a brake driver 753, a lamp driver 754, a Heating, Ventilating, and Air Conditioning (HVAC) driver 755, a window driver 756, an airbag driver 757, a sunroof driver 758, and a suspension driver 759.

The power source driver 751 may perform electronic control on a power source in the vehicle 700.

For example, if a fossil fuel-based engine is a power source, the power source driver 751 may perform electronic control on the engine. Therefore, the power source driver 751 may control the output torque of the engine. If the power source driver 751 is an engine, the power source driver 751 may restrict the speed of the vehicle by limiting the engine output torque under the control of the controller 770.

In another example, if an electrical motor is a power source, the power source driver 751 may control the motor. Thus, the rotation speed and torque of the motor may be controlled.

The power source driver 751 may receive an acceleration control signal from the around-view providing apparatus. The power source driver 751 may control the power source according to the received acceleration control signal.

The steering driver 752 may perform electronic control on a steering device in the vehicle 700. Accordingly, the traveling heading of the vehicle 700 may be changed. The steering driver 752 may receive a steering control signal from the around-view providing apparatus. The steering driver 752 may control the steering device so that the steering device may be steered according to the received steering control signal.

The brake driver 753 may perform electronic control on a brake device in the vehicle 700. For example, the brake driver 753 may decrease the speed of the vehicle 700 by controlling an operation of a brake disposed at a tire. In another example, the traveling heading of the vehicle 700 may be adjusted to the left or right by differentiating operations of brakes disposed respectively at left and right tires. The brake driver 753 may receive a deceleration control signal from the around-view providing apparatus. The brake driver 753 may control the brake device according to the received deceleration control signal.

The lamp driver 754 may control turn-on/turn-off of lamps inside or outside the vehicle 700. In addition, the lamp driver 754 may control the intensity, direction, etc. of light from a lamp. For example, the lamp driver 754 may control a turn signal lamp, a brake lamp, etc.

The HVAC driver 755 may perform electronic control on a HVAC unit in the vehicle 700. For example, if a vehicle internal temperature is high, the HVAC unit may be controlled to operate and supply cool air into the vehicle 700.

The window driver 756 may perform electronic control on a window device in the vehicle 700. For example, opening and closing of left and right side windows of the vehicle 700 may be controlled.

The airbag driver 757 may perform electronic control on an airbag device in the vehicle 700. For example, the airbag driver 757 may control inflation of an airbag in an emergency situation.

The sunroof driver 758 may perform electronic control on a sunroof device in the vehicle. For example, the sunroof driver 758 may control opening or closing of the sunroof.

The suspension driver 759 may perform electronic control on a suspension device in the vehicle. For example, if the surface of a road is rugged, the suspension driver 759 may control the suspension device to reduce jerk of the vehicle 700. The suspension driver 759 may receive a suspension control signal from the around-view providing apparatus. The suspension driver 759 may control the suspension device according to the received suspension control signal.

The memory 730 is electrically connected to the controller 770. The memory 730 may store basic data for a unit, control data for controlling an operation of the unit, and input and output data. The memory 730 may be any of various storage devices in hardware, such as ROM, RAM, EPROM, flash drive, hard drive, etc. The memory 730 may store various data for overall operations of the vehicle 700, such as programs for processing or controlling in the controller 770.

The interface unit 780 may serve as paths to various types of external devices connected to the vehicle 700. For example, the interface unit 780 may include a port connectable to the mobile terminal 600. The interface unit 780 may be connected to the mobile terminal 600 through the port. In this case, the interface unit 780 may exchange data with the mobile terminal 600.

Meanwhile, the interface unit 780 may serve as a path for supplying electrical energy to the connected mobile terminal 600. If the mobile terminal 600 is electrically connected to the interface unit 780, the interface unit 780 supplies electrical energy received from the power supply 790 to the mobile terminal 600 under the control of the controller 770.

The controller 770 may provide overall control to each unit inside the vehicle 700. The controller 770 may be referred to as an Electronic Control Unit (ECU).

The controller 770 may be implemented in hardware using at least one of an ASIC, a DSP, a DSPD, a PLD, an FPGA, a processor, a controller, a micro-controller, a microprocessor, and an electrical unit for executing other functions.

The power supply 790 may supply power needed for operating each component under the control of the controller 770. Particularly, the power supply 790 may receive power from a battery within the vehicle.

The vehicle lamp 100 may exchange data with the controller 770. Various types of information, data, or control signals generated from the vehicle lamp 100 may be output to the controller 770.

The camera module 200 may acquire an image of the surroundings of the vehicle. The camera 200 may include at least one lens, at least one image sensor (for example, a Charged Coupled Device (CCD) or Complementary Metal Oxide Semiconductor (CMOS) image sensor), and an image processor.

The camera 200 may detect an object in an image of the surroundings of the vehicle. During the object detection, the processor 170 may perform LD, VD, PD, BD, TSR, road surface detection, structure detection, etc.

The camera 200 may verify the detected object. The camera 200 may verify the detected object by a neural network-based verification scheme, a Support Vector Machine (SVM) scheme, a Haar-like based AdaBoost verification scheme, or a Histograms of Oriented Gradients (HOG) scheme. In this case, the camera 200 may perform object verification by comparing an object detected in an image of the surroundings of the vehicle with data stored in the memory 140.

The camera 200 may track the verified object. The camera 200 may calculate a motion or motion vector of the verified object, and track movement of the object based on the calculated motion or motion vector.

The camera 200 may generate information about a distance to the object based on the image of the surroundings of the vehicle. The camera 200 may acquire the information about the distance between the vehicle 700 and the object based on disparity information.

For example, the camera 200 may generate the disparity information based on a stereo image and acquire information about the distance to the object based on the generated disparity information. The stereo image may be acquired through a stereo camera.

For example, the camera 200 may generate the disparity information based on a plurality of mono images and acquire the information about the distance to an object based on the generated disparity information. The plurality of mono images may be acquired at predetermined intervals through a single camera. The mono images may be acquired from a mono camera or an around-view camera.

The camera 200 may generate information about a speed relative to the object by tracking the object. After acquiring the information about the distance to the object, the camera 200 may calculate information about a speed relative to the object based on a variation in the distance to the object with passage of time.

The camera 200 may include at least one of a mono camera, a stereo camera, or an around-view camera.

The mono camera may include one lens and one image sensor and acquire a mono image. The stereo camera may include two lenses and two image sensors and acquire a stereo image. The around-view camera may include four lenses and four image sensors and acquire an around-view image. The around-view camera may be a camera used in an Around View Monitoring (AVM) system.

The in-vehicle display device 400 may exchange data with the controller 770. The controller 770 may receive navigation information from the in-vehicle display device 400 or a separate navigation device. The navigation information may include information about a destination that has been set, information about a route to the destination, map information related to vehicle traveling, or information about a current location of the vehicle.

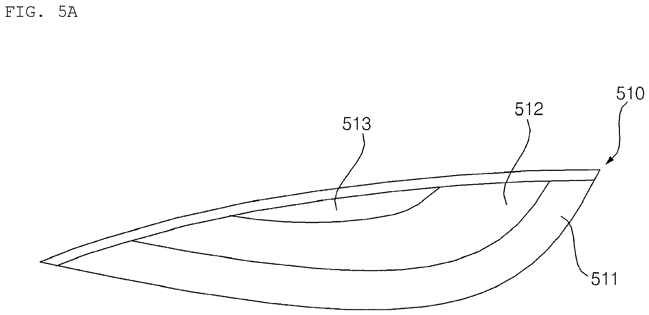

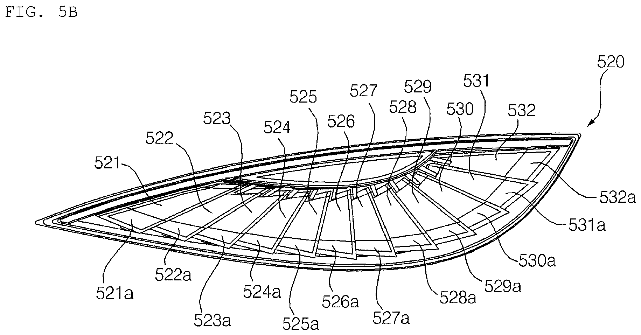

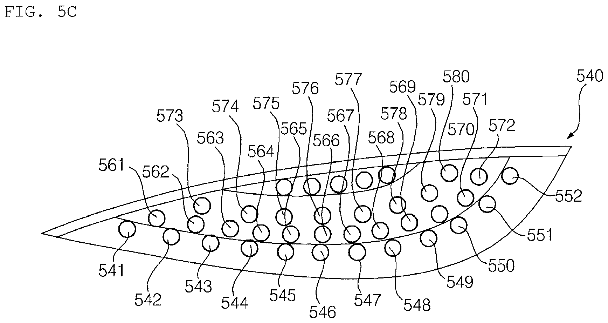

FIGS. 5A, 5B, and 5C are views referred to for describing an optical output unit according to an implementation.

Referring to FIG. 5A, the optical output unit 150 may include one surface light source 520. The surface light source 510 may include an OLED. Herein, the OLED is preferably a P-OLED.

The processor 170 may divide the surface light source 510 into a plurality of areas 511, 512, and 513 and control the areas 511, 512, and 513 individually. The plurality of areas 511, 512, and 513 may include a first area 511, a second area 512, and a third area 513. The first area 511 may function as a turn signal lamp, the second area 512 may function as a brake lamp, and the third area 513 may function as a tail lamp.

The processor 170 may divide the first area 511 into a plurality of sub-areas.

The processor 170 may control sequential turn-on of a plurality of light emitting areas in a first color and sequential turn-off of the plurality of light emitting areas. Each of the light emitting areas may include at least one of the sub-areas.

The processor 170 may control the light intensities of the other areas 512 and 513 except for the first area 511 corresponding to the light emitting areas in the surface light source 510 in correspondence with the sequential turn-on or sequential turn-off of the light emitting areas.

Since the total intensity of light output from the optical output unit 150 is maintained constant by the above control operation, a related rule may be satisfied.

According to an implementation, the first, second, and third areas 511, 512, and 513 may collectively function as a brake lamp or a tail lamp. Upon receipt of a turn signal input or an input for operating an emergency lamp through the input unit 120 while the first, second, and third areas 511, 512, and 513 collectively function as a brake lamp or a tail lamp, the processor 170 may maintain the second area 512 and the third area 513 to operate the brake lamp or the tail lamp and control only the first area 511 to operate as the turn signal lamp or the emergency lamp.

Referring to FIG. 5B, the optical output unit 150 may include a plurality of surface light sources 521, 522, 523, 524, 525, 526, 527, 528, 529, 530, 531, and 532. Each of the surface light sources 521, 522, 523, 524, 525, 526, 527, 528, 529, 530, 531, and 532 may include an OLED. The OLED is preferably a P-OLED.

The processor 170 may divide the surface light sources 521, 522, 523, 524, 525, 526, 527, 528, 529, 530, 531, and 532 into a plurality of areas and control each area individually.

The processor 170 may control sequential turn-on of a plurality of light emitting areas in the first color and sequential turn-off of the plurality of light emitting areas. Each of the light emitting areas may include an area of at least one of the surface light sources. For example, the plurality of light emitting areas may include at least one of a first area 521a of the first surface light source 521, a first area 522a of the second surface light source 522, a first area 523a of the third surface light source 523, a first area 524a of the fourth surface light source 524, a first area 525a of the fifth surface light source 525, a first area 526a of the sixth surface light source 526, a first area 527a of the seventh surface light source 527, a first area 528a of the eighth surface light source 528, a first area 529a of the ninth surface light source 529, a first area 530a of the tenth surface light source 530, a first area 531a of the eleventh surface light source 531, and a first area 532a of the twelfth surface light source 532.

According to an implementation, all of the areas of each of the plurality of surface light sources 521, 522, 523, 524, 525, 526, 527, 528, 529, 530, 531, and 532 may collectively function as a brake lamp or a tail lamp. Upon receipt of a turn signal input or an input for operating an emergency lamp through the input unit 120 while all of the areas of each of the plurality of surface light sources 521, 522, 523, 524, 525, 526, 527, 528, 529, 530, 531, and 532 collectively function as a brake lamp or a tail lamp, the processor 170 may maintain the remaining areas to operate as the brake lamp or the tail lamp, except for the first areas 521a, 522a, 523a, 524a, 525a, 526a, 527a, 528a, 529a, 530a, 531a, and 532a, and control only the first areas 521a, 522a, 523a, 524a, 525a, 526a, 527a, 528a, 529a, 530a, 531a, and 532a to operate as the turn signal lamp or the emergency lamp.

Referring to FIG. 5C, the optical output unit 150 may include a plurality of light emitting devices 541, 542, 543, 544, 545, 546, 547, 548, 549, 550, 551, 552, 561, 562, 563, 564, 565, 566, 567, 568, 569, 570, 571, 572, 573, 574, 575, 576, 577, 578, 579, and 580. Each of the light emitting devices 541, 542, 543, 544, 545, 546, 547, 548, 549, 550, 551, 552, 561, 562, 563, 564, 565, 566, 567, 568, 569, 570, 571, 572, 573, 574, 575, 576, 577, 578, 579, and 580 may include an LED.

The plurality of light emitting devices may be grouped into a first area 541, 542, 543, 544, 545, 546, 547, 548, 549, 550, 551, and 552, a second area 561, 562, 563, 564, 565, 566, 567, 568, 569, 570, 571, 572, 573, 574, 575, 576, 577, 578, 579, and 580, and a third area. The first area may function as a turn signal lamp, the second area may function as a brake lamp, and the third area may function as a tail lamp.

The processor 170 may control sequential turn-on of the plurality of light emitting areas in the first color and sequential turn-off of the plurality of light emitting areas. Each of the plurality of light emitting area may include at least one of the light emitting devices 541, 542, 543, 544, 545, 546, 547, 548, 549, 550, 551, and 552 of the first area.

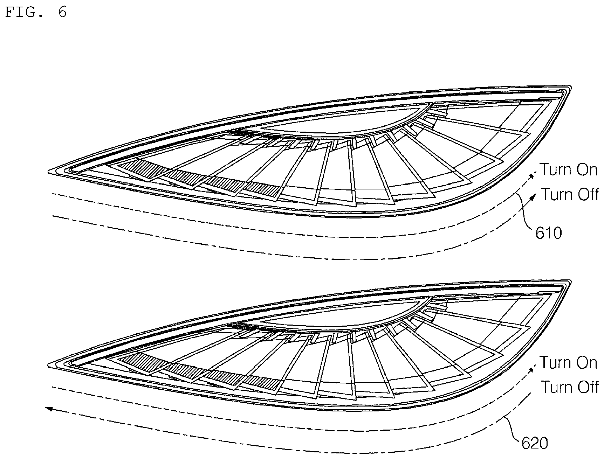

FIG. 6 is a view referred to for describing an operation for turning on and turning off a vehicle lamp according to an implementation.

Referring to FIG. 6, the processor 170 may control sequential turn-on of a plurality of light emitting areas in a first color and sequential turn-off of the plurality of light emitting areas.

The processor 170 may control sequential turn-on or turn-off of the plurality of light emitting areas with directionality.

The processor 170 may control sequential turn-on of the plurality of light emitting areas in a first direction 610. Alternatively, the processor 170 may control sequential turn-on of the plurality of light emitting areas in a second direction 620.

The processor 170 may control sequential turn-off of the plurality of light emitting areas in the first direction 610. Alternatively, the processor 170 may control sequential turn-off of the plurality of light emitting areas in the second direction 620.

The first direction 610 may be directed from the center of the overall width of the vehicle toward a periphery of the vehicle. The second direction 620 may be directed from the periphery of the vehicle toward the center of the overall width of the vehicle.

The processor 170 may control sequential turn-on or turn-off of the plurality of light emitting areas in a combination of the first direction 610 and the second direction 620.

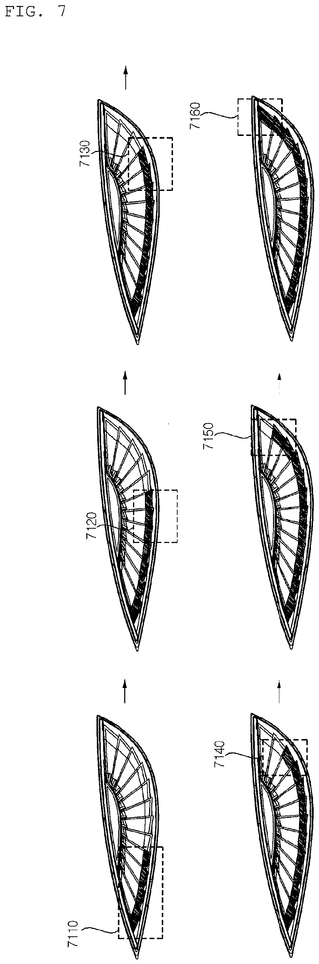

FIG. 7 is a view referred to for describing an operation for controlling the size of each of a plurality of light emitting areas to be different during sequential turn-on according to an implementation.

Referring to FIG. 7, the plurality of light emitting areas may include a first area 7110, a second area 7120, a third area 7130, a fourth area 7140, a fifth area 7150, and a sixth area 7160.

The processor 170 may control sequential turn-on of the light emitting areas 7110, 7120, 7130, 7140, 7150, and 7160 in an ascending order from the first area 7110 to the sixth rea 7160.

In this case, the processor 170 may control the sizes of the first to sixth areas 7110, 7120, 7130, 7140, 7150, and 7160 to be different. Alternatively, the processor 170 may control the sizes of a part of the first to sixth areas 7110, 7120, 7130, 7140, 7150, and 7160 to be equal.

As illustrated in the example of FIG. 7, the processor 170 may control the sizes of the plurality of flashing light emitting areas to decrease gradually. The processor 170 may control the size of the flashing first area 7110 to be largest and the size of the flashing sixth area 7160 to be smallest.

The processor 170 may control the size of the flashing second area 7120 to be smaller than the size of the flashing first area 7110. The processor 170 may control the size of the flashing third area 7130 to be smaller than the size of the flashing second area 7120. The processor 170 may control the size of the flashing fourth area 7140 to be smaller than the size of the flashing third area 7130. The processor 170 may control the size of the flashing fifth area 7150 to be smaller than the size of the flashing fourth area 7140. The processor 170 may control the size of the flashing sixth area 7160 to be smaller than the size of the flashing fifth area 7150.

Since the sizes of flashing light emitting areas are controlled to be different in the above manner, the directionality of a turn signal lamp is indicated, when the turn signal lamp is blinked.

The processor 170 may control the turn-on speed of each of the light emitting areas during sequential turn-on. For example, the processor 170 may gradually increase or decrease the turn-on speeds of the plurality of light emitting areas during sequential turn-on.

The processor 170 may control the second area 7120 to turn on faster or slower than the first area 7110. The processor 170 may control the third area 7130 to turn on faster or slower than the second area 7120. The processor 170 may control the fourth area 7140 to turn on faster or slower than the third area 7130. The processor 170 may control the fifth area 7150 to turn on faster or slower than the fourth area 7140. The processor 170 may control the sixth area 7160 to turn on faster or slower than the fifth area 7150.

The processor 170 may control the light intensity of each of the plurality of light emitting areas to be different during sequential turn-on. For example, the processor 170 may gradually increase or decrease the light intensities of the plurality of light emitting areas during sequential turn-on.

The processor 170 may control the second area 7120 to have a higher or lower light intensity level than the first area 7110. The processor 170 may control the third area 7130 to have a higher or lower light intensity level than the second area 7120. The processor 170 may control the fourth area 7140 to have a higher or lower light intensity level than the third area 7130. The processor 170 may control the fifth area 7150 to have a higher or lower light intensity level than the fourth area 7140. The processor 170 may control the sixth area 7160 to have a higher or lower light intensity level than the fifth area 7150.

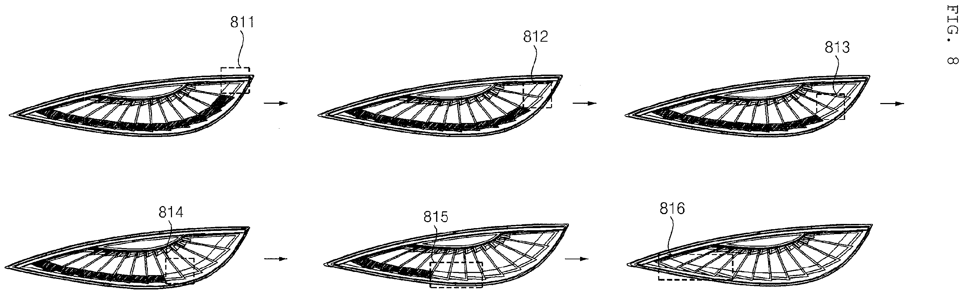

FIG. 8 is a view referred to for describing an operation for controlling the size of each of a plurality of light emitting areas to be different during sequential turn-off according to an implementation.

Referring to FIG. 8, the plurality of light emitting areas may include a first area 811, a second area 812, a third area 813, a fourth area 814, a fifth area 815, and a sixth area 816.

The processor 170 may control sequential turn-off of the light emitting areas 811, 812, 813, 814, 815, and 816 in an ascending order from the first area 811 to the sixth area 816.

In this case, the processor 170 may control the sizes of the first to sixth areas 811, 812, 813, 814, 815, and 816 to be different. Alternatively, the processor 170 may control the sizes of a part of the first to sixth areas 811, 812, 813, 814, 815, and 816 to be equal.

As illustrated in the example of FIG. 8, the processor 170 may control the sizes of the plurality of turned-off light emitting areas to increase gradually. The processor 170 may control the size of the turned-off first area 811 to be smallest and the size of the turned-off sixth area 816 to be largest.

The processor 170 may control the size of the turned-off second area 812 to be larger than the size of the turned-off first area 811. The processor 170 may control the size of the turned-off third area 813 to be larger than the size of the turned-off second area 812. The processor 170 may control the size of the turned-off fourth area 814 to be larger than the size of the turned-off third area 813. The processor 170 may control the size of the turned-off fifth area 815 to be larger than the size of the turned-off fourth area 814. The processor 170 may control the size of the turned-off sixth area 816 to be larger than the size of the turned-off fifth area 815.

Since the sizes of turned-off light emitting areas are controlled to be different in the above manner, the directionality of a turn signal lamp is indicated, when the turn signal lamp is blinked.

The processor 170 may control the turn-off speed of each of the light emitting areas during sequential turn-off. For example, the processor 170 may gradually increase or decrease the turn-off speeds of the plurality of light emitting areas during sequential turn-off.

The processor 170 may control the second area 812 to turn off faster or slower than the first area 811. The processor 170 may control the third area 813 to turn off faster or slower than the second area 812. The processor 170 may control the fourth area 814 to turn off faster or slower than the third area 813. The processor 170 may control the fifth area 815 to turn off faster or slower than the fourth area 814. The processor 170 may control the sixth area 816 to turn off faster or slower than the fifth area 815.

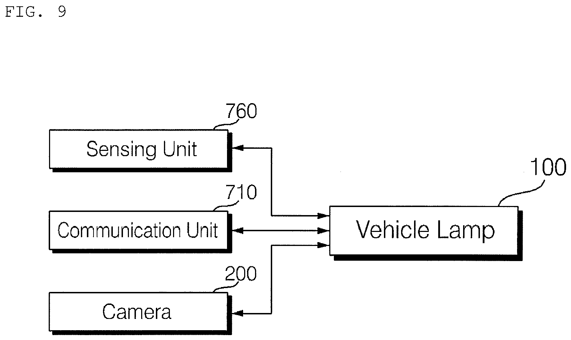

FIG. 9 is a view referred to for describing an operation for receiving traveling environment information according to an implementation.

The processor 170 may receive traveling environment information from the sensing unit 760, the communication unit 710, or the camera 200.

The traveling environment information may include object information, weather information, traveling road information, traveling time information, and illumination intensity information. The object information may include information about the presence or absence of an object, information about a location of the object, information about a distance to the object, and information about a relative speed of the object.

The processor 170 may receive various sensing information from the sensing unit 760 of the vehicle 700 through the interface unit 130. For example, the processor 170 may receive vehicle ambient illumination intensity information.

The processor 170 may receive traffic information or weather information from the communication unit 710 of the vehicle 700 through the interface unit 130. According to an implementation, the vehicle lamp 100 may include the separate communication unit 110 and receive traffic information or weather information through the communication unit 110. The traffic information or the weather information may be provided by the external server 601.

The processor 170 may receive object information from the camera 200 through the interface unit 130.

The processor 170 may control the intensity of light output from the optical output unit 150 according to traveling environment information.

The processor 170 may control the intensity of light output from the optical output unit 150 based on received illumination intensity information. For example, if a vehicle ambient illumination intensity value is high, the processor 170 may increase the intensity of light output from the optical output unit 150, and if the vehicle ambient illumination intensity value is low, the processor 170 may decrease the intensity of light output from the optical output unit 150.

The processor 170 may control the intensity of light output from the optical output unit 150 based on traffic information. For example, the processor 170 may control the intensity of light output from the optical output unit 150 according to whether vehicles are densely or sparsely located in a predetermined zone.

The processor 170 may control the intensity of light output from the optical output unit 150 based on weather information. For example, the processor 170 may control the intensity of light output from the optical output unit 150 according to whether it is fine, cloudy, raining, snowing, or foggy.

The processor 170 may control the intensity of light output from the optical output unit 150 based on object information. For example, the processor 170 may control the intensity of light output from the optical output unit 150 based on a distance to a following vehicle. As the following vehicle is closer, the processor 170 may decrease the light intensity, and as the following vehicle is farther, the processor 170 may increase the light intensity.

The processor 170 may control a period during which the plurality of light emitting areas are sequentially turned on in the first color or a period during which the plurality of light emitting areas are sequentially turned off, according to traveling environment information.

If the traveling environment information indicates an environment requiring caution of a driver, the processor 170 may control the turn-on period or the turn-off period to be shorter than usual.

For example, if a vehicle ambient illumination intensity is low, traffic is heavy, it is cloudy, it is raining, or it is foggy, the processor 170 may control the turn-on period or the turn-off period to be shorter than usual. Therefore, a third party viewing the vehicle lamp may be guided to drive with caution.

The processor 170 may control the turn-on period or the turn-off period based on object information. For example, if a distance to a following vehicle is equal to or smaller than a predetermined distance (for example, a safety distance), the processor 170 may shorten the turn-on period or the turn-off period. Therefore, the driver of the following vehicle may be guided to drive, maintaining the safety distance.

The processor 170 may control the sizes of the plurality of light emitting areas according to traveling environment information. If the traveling environment information indicates an environment requiring caution of a driver, the processor 170 may control a first area (511 in FIG. 5A) of a surface light source for the plurality of light emitting areas or first areas (521a to 532a in FIG. 5B) of a plurality of surface light sources (521 to 532 in FIG. 5) to become larger in size. Therefore, the driver of the following vehicle recognizes a signal more clearly.

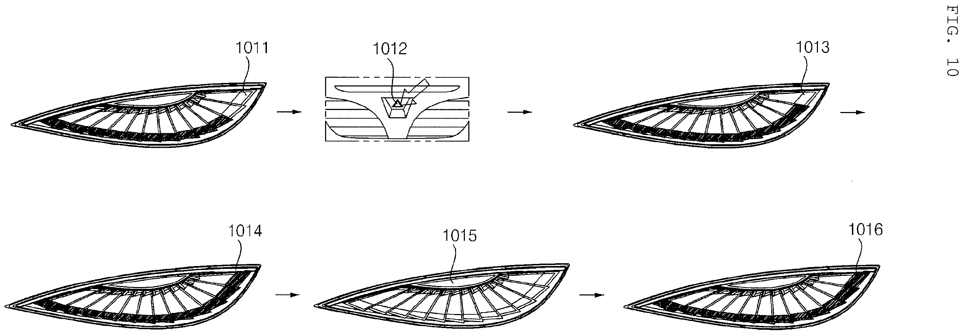

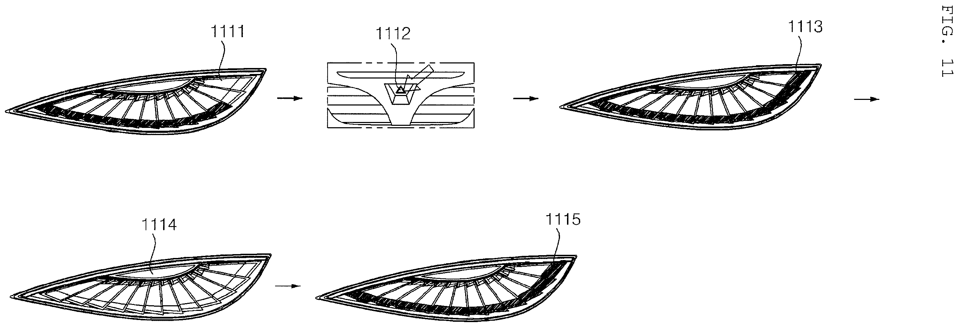

FIGS. 10 and 11 are views referred to for describing an operation of a vehicle lamp, when an input for operating an emergency lamp is received during sequential turn-on of a plurality of light emitting areas according to an implementation.

Referring to FIG. 10, upon receipt of a turn signal input, the processor 170 may control sequential turn-on of the plurality of light emitting areas in the first color. The processor 170 may control sequential turn-off of the plurality of light emitting areas. Herein, the processor 170 may control sequential turn-on or sequential turn-off of the plurality of light emitting areas according to a predetermined period.

While the plurality of light emitting areas are being turned on sequentially in the first color, as indicated by reference numeral 1011, an input for operating an emergency lamp may be received through the input unit 120, as indicated by reference numeral 1012. In this case, the processor 170 may control blinking of all of the light emitting areas, as indicated by reference numeral 1016, after a period 1013 and 1014 during which the plurality of light emitting areas are sequentially turned on or a period 1015 during which the sequentially turned-on light emitting areas are turned off.

Referring to FIG. 11, upon receipt of a turn signal input, the processor 170 may control sequential turn-on of the plurality of light emitting areas in the first color. The processor 170 may control sequential turn-off of the plurality of light emitting areas. Herein, the processor 170 may control sequential turn-on or sequential turn-off of the plurality of light emitting areas according to a predetermined period.

While the plurality of light emitting areas are being turned on sequentially in the first color, as indicated by reference numeral 1111, an input for operating an emergency lamp may be received through the input unit 120, as indicated by reference numeral 1112. In this case, the processor 170 may control blinking of all of the light emitting areas at a time of receiving the input, as indicated by reference numerals 1113, 1114, and 1115.

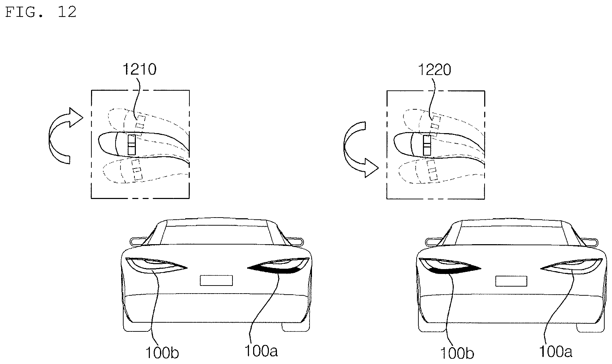

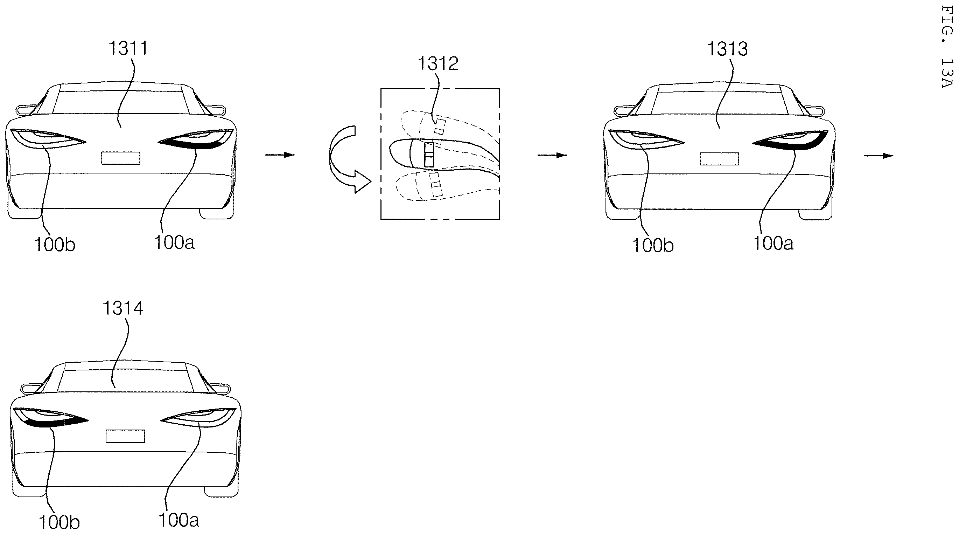

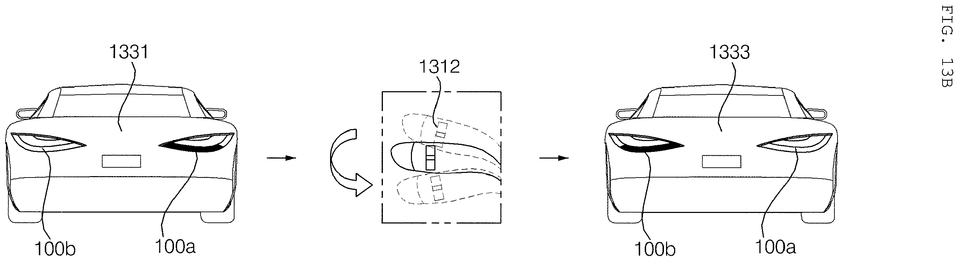

FIGS. 12, 13A, and 13B are views referred to for describing an operation of a vehicle lamp, when a turn signal input is received during sequential turn-on of a plurality of first light emitting areas according to an implementation.

Referring to FIG. 12, the input unit 120 may be configured as a lever attached onto a steering wheel column. If the lever is pushed up as indicated by reference numeral 1210, a left-side turn signal lamp may operate, and if the lever is pushed down as indicated by reference numeral 1220, a right-side turn signal lamp may operate.

For example, upon receipt of a first turn signal input as indicated by reference numeral 1210, the processor 170 may control sequential turn-on of the first light emitting areas in the first color and sequential turn-off of the first light emitting areas.

For example, upon receipt of a second turn signal input as indicated by reference numeral 1220, the processor 170 may control sequential turn-on of a plurality of second light emitting areas 100b in a second color and sequential turn-off of the second light emitting areas 100b.

Referring to FIG. 13A, upon receipt of a first turn signal input through the input unit 120, the processor 170 may control sequential turn-on of the plurality of first light emitting areas in the first color. The processor 170 may control sequential turn-off of the plurality of first light emitting areas. Herein, the processor 170 may control sequential turn-on or sequential turn-off of the light emitting areas according to a predetermined period.

During sequential turn-on of the plurality of first light emitting areas 100a in response to the first turn signal input as indicated by reference numeral 1311, the processor 170 may receive the second turn signal input through the input unit 120 as indicated by reference numeral 1312. In this case, the processor 170 may control sequential turn-on of the plurality of second light emitting areas 100b in the first color after a period 1313 of the sequential turn-on of the first light emitting areas 100a or a period of the sequential turn-off of the first light emitting areas 100a which have been all flashed, as indicated by reference numeral 1314. Then the processor 170 may sequential turn-off of the plurality of second light emitting areas 100b. In this case, the processor 170 may control the first light emitting areas 100a not to flash any longer, after sequential turn-on or sequential turn-off of the first light emitting areas 100a for one period from a time of receiving the second turn signal input.

During sequential turn-off of the first light emitting areas 100a which have been turned sequentially in the first color in response to the first turn signal input, the processor 170 may receive the second turn signal input through the input unit 120. In this case, the processor 170 may control sequential turn-on of the plurality of second light emitting areas 100b in the first color, after a period of the sequential turn-off of the plurality of first light emitting areas 100a. Subsequently, the processor 170 may control sequential turn-off of the plurality of second light emitting areas 100b. In this case, the processor 170 may control the first light emitting areas 100a not to be turned on any longer, after sequential turn-on or sequential turn-off of the first light emitting areas 100a for one period from a time of receiving the second turn signal input.

Referring to FIG. 13B, upon receipt of the first turn signal input through the input unit 120, the processor 170 may control sequential turn-on of the plurality of first light emitting areas in the first color. The processor 170 may control sequential turn-off of the plurality of first light emitting areas. Herein, the processor 170 may control sequential turn-on or sequential turn-off of the light emitting areas according to a predetermined period.

During sequential turn-on of the plurality of first light emitting areas 100a in response to the first turn signal input as indicated by reference numeral 1311, the processor 170 may receive the second turn signal input through the input unit 120 as indicated by reference numeral 1312. In this case, the processor 170 may control sequential turn-on of the plurality of second light emitting areas 100b in the first color from a time of receiving the second turn signal input, as indicated by reference numeral 1333. Then the processor 170 may sequential turn-off of the plurality of second light emitting areas 100b. In this case, the processor 170 may control the first light emitting areas 100a not to flash any longer from the time of receiving the second turn signal input.

During sequential turn-off of the first light emitting areas 100a which have been turned on sequentially in the first color in response to the first turn signal input, the processor 170 may receive the second turn signal input through the input unit 120, as indicated by reference numeral 1312. In this case, the processor 170 may control sequential turn-on of the plurality of second light emitting areas 100b in the first color, from a time of receiving the second turn signal input. Subsequently, the processor 170 may control sequential turn-off of the plurality of second light emitting areas 100b. In this case, the processor 170 may control the first light emitting areas 100a not to flash any longer from the time of receiving the second turn signal input.

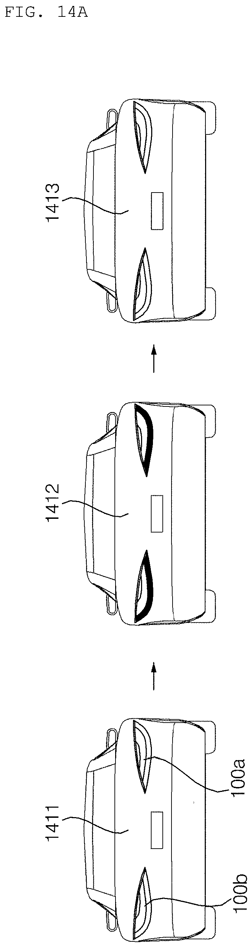

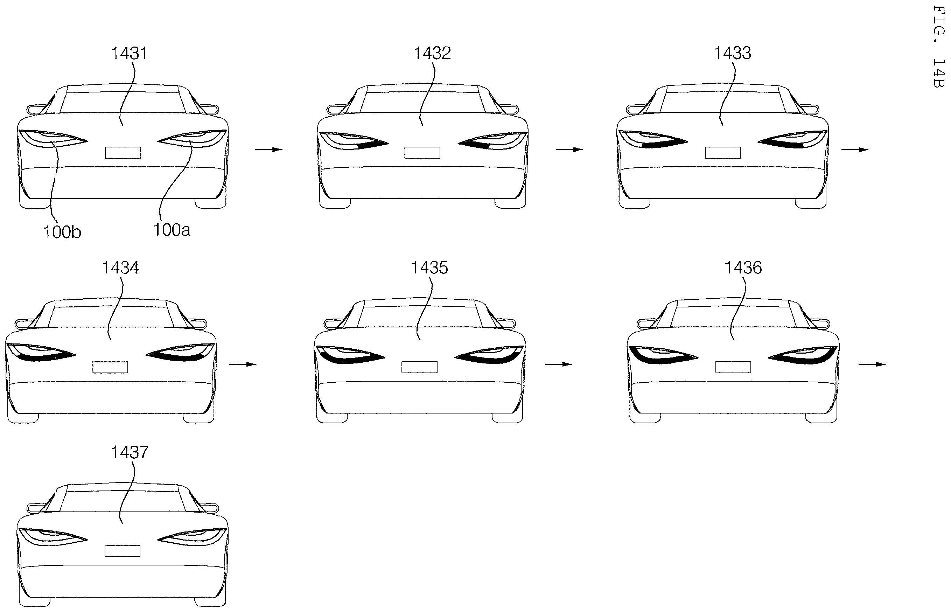

FIGS. 14A and 14B are views referred to for describing emergency lamp operation patterns according to an implementation.

Referring to FIG 14A, the processor 170 may receive an input for operating an emergency lamp through the input unit 120.

In a state 1411 where all of the first light emitting areas 100a and the second light emitting areas 100b are turned off, the processor 170 may receive an input for operating an emergency lamp through the input unit 120.

In this case, the processor 170 may control blinking of all of the first light emitting areas 100a and the second light emitting areas 100b at once, as indicated by reference numerals 1412 and 1413.

Referring to FIG. 14B, in a state 1431 where all of the first light emitting areas 100a and the second light emitting areas 100b are turned off, the processor 170 may receive an input for operating an emergency lamp through the input unit 120.

In this case, the processor 170 may control sequential turn-on of the first light emitting areas 100a and sequential turn-on of the second light emitting areas 100b in the first color, as indicated by reference numerals 1432, 1433, 1434, 1435, and 1436. The processor 170 may control sequential turn-on of the first light emitting areas 100a and sequential turn-on of the second light emitting areas 100b in the first color in the same pattern or in the same period.

In the state where all of the first and second light emitting areas 100a and 100b have been turned on, the processor 170 may control turn-off of the first and second light emitting areas 100a and 100b at once.

Alternatively, in the state where all of the first and second light emitting areas 100a and 100b have been turned on, the processor 170 may control sequential turn-off of the first light emitting areas 100a and sequential turn-off of the first light emitting areas 100b. The processor 170 may control sequential turn-off of the first and second light emitting areas 100a and 100b in the same pattern or in the same period.

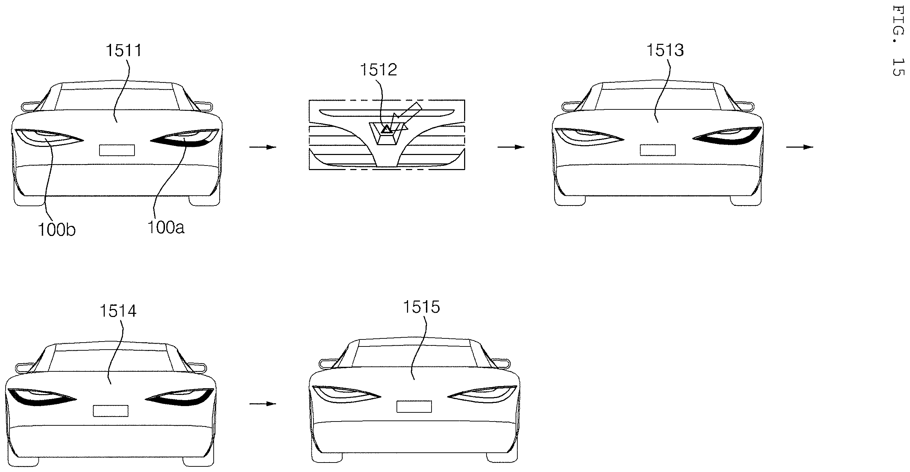

FIGS. 15 to 20 are views referred to for describing an operation of a vehicle lamp, when an input for operating an emergency lamp is received according to an implementation.

The processor 170 may divide the first optical output unit into a plurality of first light emitting areas. The processor 170 may control sequential turn-on of the first light emitting areas in the first color and sequential turn-off of the first light emitting areas.

The processor 170 may divide into the second optical output unit into a plurality of second light emitting areas. The processor 170 may control sequential turn-on of the second light emitting areas in the first color and sequential turn-off of the second light emitting areas.

Referring to FIG. 15, during sequential turn-on 1511 of the plurality of first light emitting areas 100a in the first color in response to the first turn signal input, the processor 170 may receive an input for operating an emergency lamp through the input unit 120, as indicated by reference numeral 1512.

In this case, in a state 1513 where the first light emitting areas 100a have been sequentially turned on and thus all of the first light emitting areas 100a flash, the processor 170 may control blinking of all of the first and second light emitting areas 100a and 100b at once, as indicated by reference numerals 1514 and 1515.

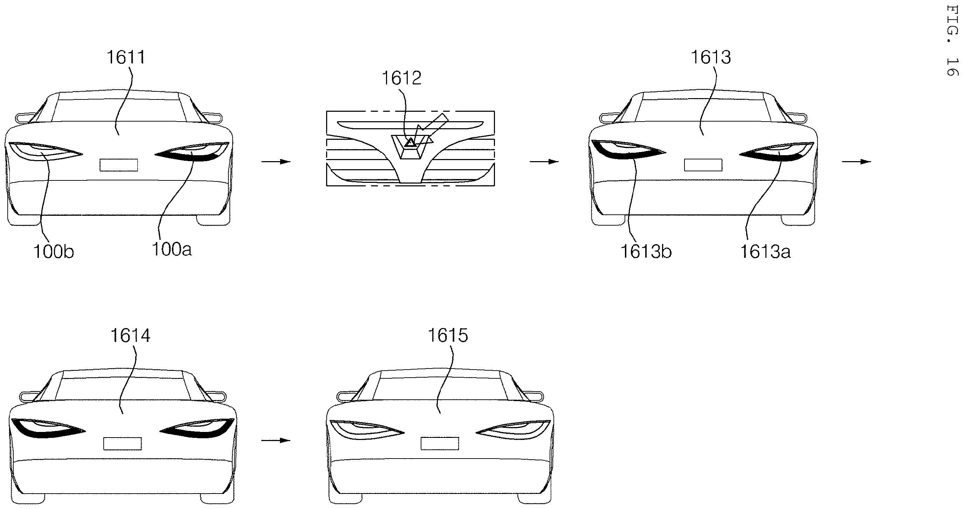

Referring to FIG. 16, during sequential turn-on 1611 of the plurality of first light emitting areas 100a in the first color in response to the first turn signal input, the processor 170 may receive an input for operating an emergency lamp through the input unit 120, as indicated by reference numeral 1612.

The processor 170 may continue the sequential turn-on of the first light emitting areas 100a as indicated by reference numeral 1613a, and control turn-on of all of the second light emitting areas 100b as indicated by reference numeral 1613b, from a time of receiving the input.

Subsequently, in a state 1614 where the first light emitting areas 100a have been sequentially turned on and thus all of the first light emitting areas 100a flash, the processor 170 may control blinking of all of the first and second light emitting areas 100a and 100b at once.

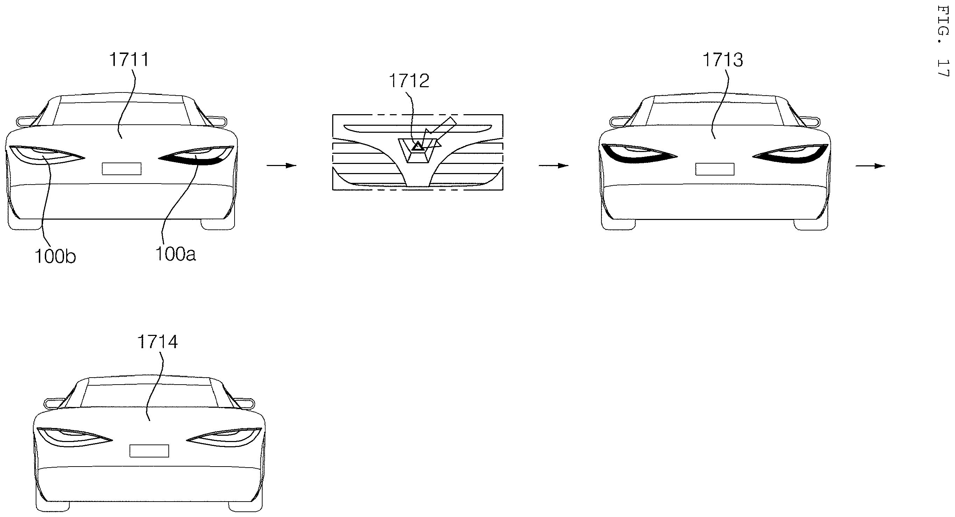

Referring to FIG. 17, during sequential turn-on 1711 of the plurality of first light emitting areas 100a in the first color in response to the first turn signal input, the processor 170 may receive an input for operating an emergency lamp through the input unit 120, as indicated by reference numeral 1712.

In this case, the processor 170 may control blinking of all of the light emitting areas 100a and the second light emitting areas 100b at once at a time of receiving the input, as indicated by reference numeral 1713 and 1714.

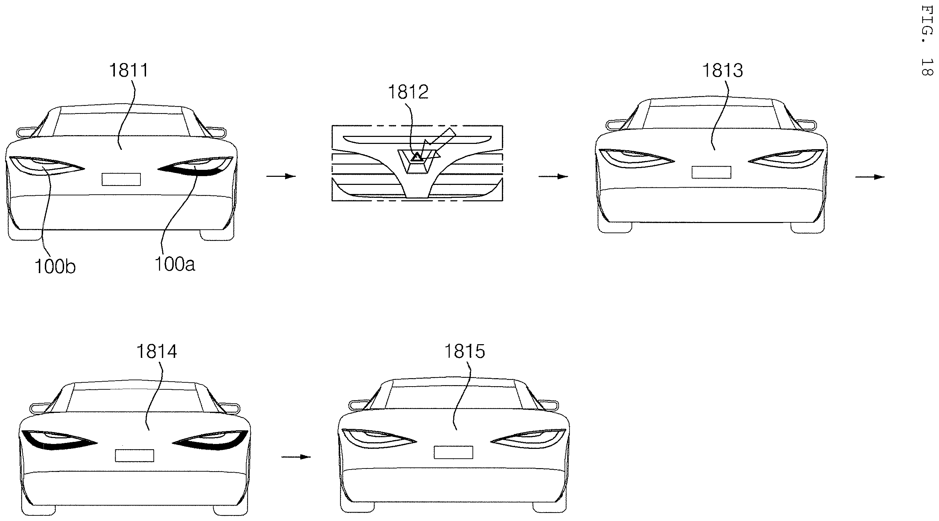

Referring to FIG. 18, during sequential turn-off 1811 of the plurality of first light emitting areas 100a in response to the first turn signal input, the processor 170 may receive an input for operating an emergency lamp through the input unit 120, as indicated by reference numeral 1812.

In this case, in a state 1813 where the first light emitting areas 100a have been sequentially turned off and thus all of the first light emitting areas 100a are off, the processor 170 may control blinking of all of the first and second light emitting areas 100a and 100b at once, as indicated by reference numerals 1814 and 1815.

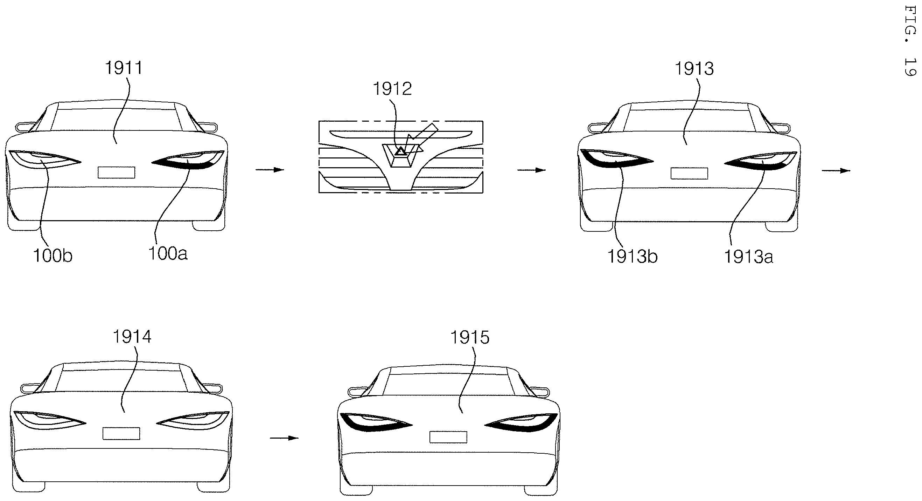

Referring to FIG. 19, during sequential turn-off 1911 of the plurality of first light emitting areas 100a in response to the first turn signal input, the processor 170 may receive an input for operating an emergency lamp through the input unit 120, as indicated by reference numeral 1912.

The processor 170 may continue the sequential turn-off of the first light emitting areas 100a as indicated by reference numeral 1913a, and control turn-on of all of the second light emitting areas 100b as indicated by reference numeral 1913b, from a time of receiving the input.

Subsequently, in a state 1914 where the first light emitting areas 100a have been sequentially turned off and thus all of the first light emitting areas 100a are off, the processor 170 may control blinking of all of the first and second light emitting areas 100a and 100b at once.

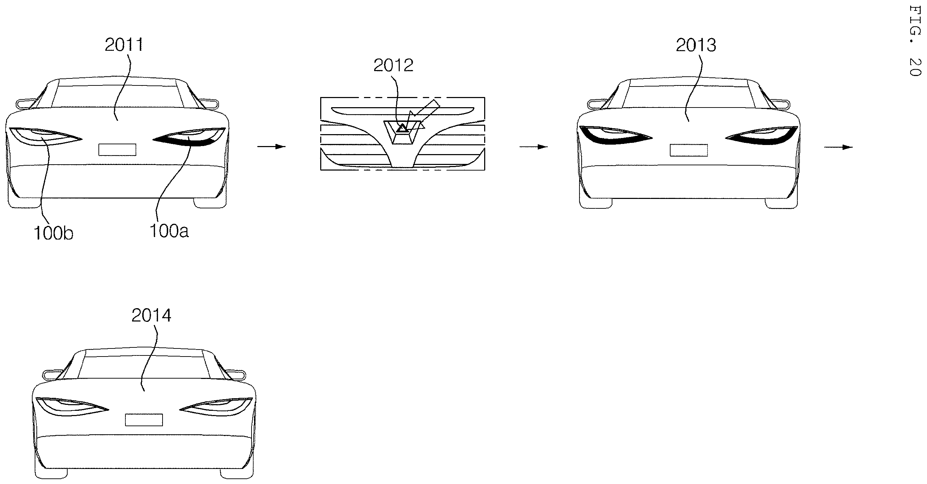

Referring to FIG. 20, during sequential turn-off 2011 of the plurality of first light emitting areas 100a in response to the first turn signal input, the processor 170 may receive an input for operating an emergency lamp through the input unit 120, as indicated by reference numeral 2012.

In this case, the processor 170 may control blinking of the light emitting areas 100a and the second light emitting areas 100b at once at a time of receiving the input, as indicated by reference numeral 2013 and 2014.

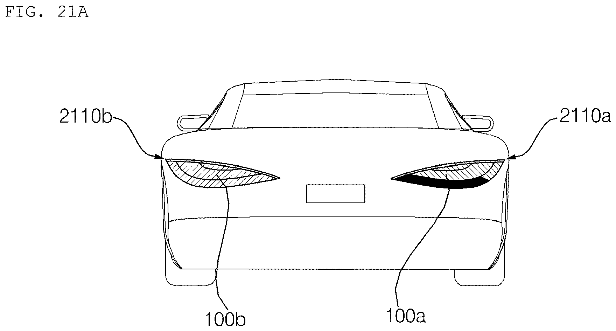

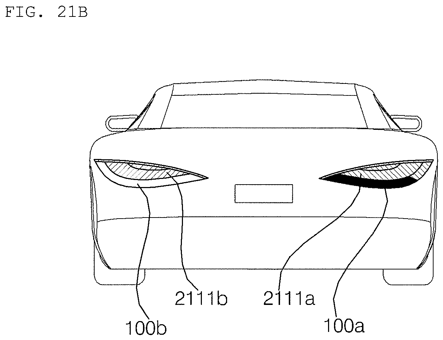

FIGS. 21A and 21B are views referred to for describing an operation of a vehicle lamp according to an implementation.

Referring to FIG. 21A, the first output unit may include a first surface light source 2110a. Each of the plurality of first light emitting areas 100a may include an area of the first surface light source 2110a.

The second output unit may include a second surface light source 2110b. Each of the plurality of second light emitting areas 100b may include an area of the second surface light source 2110b.

Meanwhile, the first light emitting areas 100a may include a first area 2111a of the first surface light source 2110a. The processor 170 may control an area of the first surface light source 2110a including the first area 2111a to operate as a brake lamp or a tail lamp. In this case, the processor 170 may control flashing of the area of the first surface light source 2110a including the first area 2111a in a second color. The second color may be, but not limited to, red, which may be determined according to a road traffic rule.

Upon receipt of a turn signal input or an input for operating an emergency lamp through the input unit 120 while the area of the first surface light source 2110a including the first area 2111a is operating as a brake lamp or a tail lamp, the processor 170 may control operation of the first area 2111a as a turn signal lamp or an emergency lamp. The turn signal lamp or the emergency lamp operates as described before with reference to FIGS. 12 to 20.

Meanwhile, the second light emitting areas 100b may include a first area 2111b of the second surface light source 2110b. The processor 170 may control an area of the second surface light source 2110b including the first area 2111b to operate as a brake lamp or a tail lamp. In this case, the processor 170 may control flashing of the area of the second surface light source 2110a including the first area 2111b in the second color.

Upon receipt of a turn signal input or an input for operating an emergency lamp through the input unit 120 while the area of the second surface light source 2110b including the first area 2111b is operating as a brake lamp or a tail lamp, the processor 170 may control operation of the first area 2111b as a turn signal lamp or an emergency lamp. The turn signal lamp or the emergency lamp operates as described before with reference to FIGS. 12 to 20.

When the first light emitting areas 100a and the second light emitting areas are sequentially turned on or sequentially turned off, the intensity of light output from the second surface light source 2110b may be controlled to match the intensity of light output from the first surface light source 2110a. Alternatively, the intensity of light output from the first surface light source 2110a may be controlled to match the intensity of light output from the second surface light source 2110b.

Referring to FIG. 21B, the plurality of first light emitting areas 100a may include the first area 2111a of the first surface light source 2110a. The processor 170 may control an area of the first surface light source 2110a except for the first area 2111a to operate as a brake lamp or a tail lamp. In this case, the processor 170 may control operation of the first area 2111a as a turn signal lamp or an emergency lamp. The turn signal lamp or the emergency lamp operates as described before with reference to FIGS. 12 to 20.

Meanwhile, the second light emitting areas 100b may include the first area 2111b of the second surface light source 2110b. The processor 170 may control an area of the second surface light source 2110b except for the first area 2111b to operate as a brake lamp or a tail lamp. In this case, the processor 170 may control operation of the first area 2111b as a turn signal lamp or an emergency lamp. The turn signal lamp or the emergency lamp operates as described before with reference to FIGS. 12 to 20.

If the first area 2111a of the first surface light source 2110a functions as a turn signal lamp, the first area 2111b of the second surface light source 2110b may be maintained turned off. Herein, the area of the first surface light source 2110a except for the first area 2111a and the area of the second surface light source 2110b except for the first area 2111b may be turned on in the second color to thereby function as brake lamps or tail lamps.

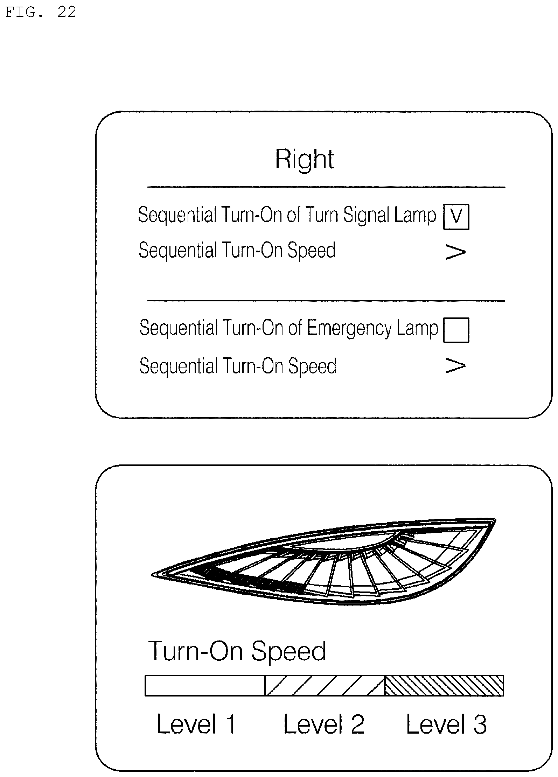

FIG. 22 is a view referred for describing an operation for setting a vehicle lamp according to an implementation.

Referring to FIG. 22, the input unit 120 may include a touch screen. The processor 170 may receive a vehicle lamp setting input through the input unit 120.

The processor 170 may receive an input for setting sequential turn-on or sequential turn-off of a turn signal lamp. In this case, the processor 170 may receive a sequential turn-on or sequential turn-off speed or period setting. A plurality of levels are defined for speeds or periods, and a selected level may be input as a speed or a period.

The processor 170 may receive an input for setting sequential turn-on or sequential turn-off of an emergency lamp. In this case, the processor 170 may receive a sequential turn-on or sequential turn-off speed or period setting. A plurality of levels are defined for speeds or periods, and a selected level may be input as a speed or a period.

Some implementations may have one or more of the following effects.

First, since a plurality of light emitting areas are sequentially turned on or sequentially turned off, a vehicle lamp blinks with high visibility.

Secondly, since another nearby vehicle or a pedestrian intuitively recognizes a vehicle, the probability of traffic accidents is decreased.

Thirdly, the vehicle lamp blinks adaptively to an environment by turning on or off with a light intensity, a period, or a pattern which is changed according to traveling environment information.

The above-described examples may be implemented as computer-readable code in a computer-readable recording medium recording a program. The computer-readable recording medium may include any kind of recording device storing computer-readable data. Examples of the computer-readable recording medium may include Hard Disk Driver (HDD), Solid State Disk (SSD), Silicon Disk Drive (SDD), ROM, RAM, Compact Disk-Read Only Memory (CD-ROM), magnetic tape, floppy disk, optical data storage device, and carrier waves (for example, transmission over the Internet). In addition, the computer may include the processor 170 or the controller 770. The above implementations are therefore to be construed in all aspects as illustrative and not restrictive. The scope of the invention should be determined by the appended claims, not by the above description, and all changes coming within the meaning of the appended claims are intended to be embraced therein.

## Claims

1. A lamp (100) for a vehicle, comprising:
an optical output unit (150) including at least one surface light source, each surface light source including an OLED (Organic Light Emitting Diode); and
at least one processor (170) configured to:
determine a partitioning of a light emitting area of the optical output unit (150) into a plurality of light emitting areas;
control each of the plurality of light emitting areas individually;
control a sequential turn-on operation that turns on each of the plurality of light emitting areas in a first sequential order in a first color with directionality; and
control a sequential turn-off operation that turns off each of the plurality of light emitting areas in a second sequential order with directionality,
wherein the at least one processor (170) is further configured to:
based on each of the plurality of light emitting areas being sequentially turned on in the first color, control a size of the plurality of light emitting areas to be different during the sequential turn-on operation,
**characterized in that**
based on each of the plurality of light emitting areas being sequentially turned on in the first color, control a size of the plurality of light emitting areas to be gradually smaller during the sequential turn-on operation.

2. The lamp (100) according to claim 1, wherein the at least one processor (170) is configured to control, in correspondence with the sequential turn-on operation or the sequential turn-off operation of each of the plurality of light emitting areas, a light intensity of an area of the surface light source that excludes each of the plurality of light emitting areas.

3. The lamp (100) according to any one of claims 1 and/or 2, wherein the optical output unit (150) comprises a plurality of surface light sources, and each of the plurality of light emitting areas a region of at least one of the plurality of surface light sources.

4. The lamp (100) according to any one of claims 1 to 3, wherein the at least one processor (170) is further configured to:
based on each of the plurality of light emitting areas being sequentially turned off, control a size of each of the plurality of light emitting areas to be different during the sequential turn-off operation.

5. The lamp (100) according to claim 4, wherein the at least one processor (170) is further configured to:
based on each of the plurality of light emitting areas being sequentially turned off, control sizes of the plurality of light emitting areas to be gradually larger during the sequential turn-off operation.

6. The lamp (100) according to any one of claims 1 to 5, further comprising an interface (130) configured to receive vehicle traveling environment information,
wherein the at least one processor (170) is further configured to control, according to the vehicle traveling environment information, an intensity of light output from the optical output unit.

7. The lamp (100) according to any one of claims 1 to 5, further comprising an interface (130) configured to receive vehicle traveling environment information,
wherein the at least one processor (170) is further configured to control, according to the vehicle traveling environment information, a period of sequentially turning on each of the plurality of light emitting areas in the first color or a period of sequentially turning off each of the plurality of light emitting areas.

8. The lamp (100) according to any one of claims 1 to 7, further comprising an input unit (120),
wherein the at least one processor (170) is further configured to, based on a receipt of an input for operating an emergency lamp through the input unit and after a period of sequentially turning on each of the plurality of light emitting areas in the first color or a period of sequentially turning off each of the plurality of light emitting areas: control a blinking of all of the plurality of light emitting areas.

9. The lamp (100) according to any one of claims 1 to 7, further comprising an input unit (120),
wherein the at least one processor (170) is further configured to, based on a receipt of an input for operating an emergency lamp through the input unit, control a blinking of all of the plurality of light emitting areas at a time of receipt of the input.

## Patentansprüche

1. Leuchte (100) für ein Fahrzeug, umfassend:
eine optische Ausgabeeinheit (150) mit zumindest einer Oberflächenlichtquelle, wobei jede Oberflächenlichtquelle eine OLED (Organische Leuchtdiode) beinhaltet; und
zumindest einen Prozessor (170), der eingerichtet ist zum:
Festlegen einer Aufteilung einer lichtemittierenden Fläche der optischen Ausgabeeinheit (150) in eine Vielzahl lichtemittierender Flächen,
individuelles Steuern jeder der Vielzahl lichtemittierender Flächen,
Steuern eines sequentiellen Einschaltvorgangs, der jede der Vielzahl lichtemittierender Flächen in einer ersten Reihenfolge in einer ersten Farbe mit Richtungsabhängigkeit einschaltet; und
Steuern eines sequentiellen Ausschaltvorgangs, der jede der Vielzahl lichtemittierender Flächen in einer zweiten Reihenfolge mit Richtungsabhängigkeit ausschaltet,
wobei der mindestens eine Prozessor (170) zudem dazu eingerichtet ist,
darauf basierend, dass jede der Vielzahl lichtemittierender Flächen in der ersten Farbe sequentiell eingeschaltet wird, eine Größe der Vielzahl lichtemittierender Flächen zu steuern, während des sequentiellen Einschaltvorgangs verschieden zu sein,
**dadurch gekennzeichnet, dass**
darauf basierend, dass jede der Vielzahl lichtemittierender Flächen sequentiell in der ersten Farbe eingeschaltet wird, eine Größe der Vielzahl lichtemittierender Flächen gesteuert wird, während des sequentiellen Einschaltvorgangs immer kleiner zu werden.

2. Leuchte (100) nach Anspruch 1, wobei der zumindest eine Prozessor (170) dazu eingerichtet ist, in Übereinstimmung mit dem sequentiellen Einschaltvorgang oder dem sequentiellen Ausschaltvorgang jede der Vielzahl lichtemittierender Flächen eine Lichtintensität eines Gebiets der Oberflächenlichtquelle, das jede der Vielzahl lichtemittierender Flächen ausschließt, zu steuern.

3. Leuchte (100) nach einem der Ansprüche 1 und/oder 2, wobei die optische Ausgabeeinheit (150) eine Vielzahl von Oberflächenlichtquellen umfasst und jede der Vielzahl lichtemittierender Flächen einen Bereich von zumindest einer der Vielzahl von Oberflächenlichtquellen.

4. Leuchte (100) nach einem der Ansprüche 1 bis 3, wobei der zumindest eine Prozessor (170) zudem dazu eingerichtet ist,
basierend darauf, dass jede der Vielzahl lichtemittierender Flächen sequentiell ausgeschaltet wird, eine Größe jede der Vielzahl lichtemittierender Flächen so zu steuern, während des sequentiellen Ausschaltvorgangs verschieden zu sein.

5. Leuchte (100) nach Anspruch 4, wobei der zumindest eine Prozessor (170) zudem dazu eingerichtet ist,
basierend darauf, dass jede der Vielzahl lichtemittierender Flächen sequentiell ausgeschaltet wird, Größen der der Vielzahl lichtemittierender Flächen zu steuern, während des sequentiellen Ausschaltvorgangs immer größer zu werden.

6. Leuchte (100) nach einem der Ansprüche 1 bis 5, zudem mit einer Schnittstelle (130), die dazu eingerichtet ist, Informationen über die Fahrumgebung des Fahrzeugs zu empfangen, wobei der zumindest eine Prozessor (170) zudem dazu eingerichtet ist, gemäß den Informationen über die Fahrumgebung des Fahrzeugs eine Intensität der Lichtausgabe von der optischen Ausgabeeinheit zu steuern.

7. Leuchte (100) nach einem der Ansprüche 1 bis 5, zudem mit einer Schnittstelle (130) umfasst, die dazu eingerichtet ist, Informationen über die Fahrumgebung des Fahrzeugs empfangen, wobei der zumindest eine Prozessor (170) zudem dazu eingerichtet ist, gemäß den Informationen über die Fahrumgebung des Fahrzeugs eine Zeitdauer des sequentiellen Einschaltens jeder der Vielzahl lichtemittierender Flächen in der ersten Farbe oder eine Zeitdauer des sequentiellen Ausschaltens jede der Vielzahl lichtemittierender Flächen zu steuern.

8. Leuchte (100) nach einem der Ansprüche 1 bis 7, zudem mit einer Eingabeeinheit (120), wobei der zumindest eine Prozessor (170) zudem dazu eingerichtet ist, basierend auf einem Empfang einer Eingabe zum Betrieb einer Notleuchte über die Eingabeeinheit und nach einer Zeitdauer des sequentiellen Einschaltens jeder der Vielzahl lichtemittierender Flächen in der ersten Farbe oder einer Zeitdauer des sequentiellen Ausschaltens jeder der Vielzahl lichtemittierender Flächen ein Blinken sämtlicher der Vielzahl lichtemittierender Flächen zu steuern.

9. Leuchte (100) nach einem der Ansprüche 1 bis 7, zudem mit einer Eingabeeinheit (120), wobei der zumindest eine Prozessor (170) zudem dazu eingerichtet ist, basierend auf einem Empfang einer Eingabe zum Betrieb einer Notleuchte über die Eingabeeinheit ein Blinken sämtlicher der Vielzahl lichtemittierender Flächen zu einem Zeitpunkt des Empfangs der Eingabe zu steuern.

## Revendications

1. Luminaire (100) pour un véhicule, comprenant:
une unité de sortie optique (150) comportant au moins une source surfacique de lumière, chaque source surfacique de lumière comprenant une OLED (diode électroluminescente organique) ; et
au moins un processeur (170) configuré pour:
déterminer une partition d'une zone d'émission de lumière de l'unité de sortie optique (150) en une pluralité de zones d'émission de lumière;
commander individuellement chacune de la pluralité de zones d'émission de lumière;
commander une opération d'allumage séquentiel qui allume chacune de la pluralité de zones d'émission de lumière dans un premier ordre séquentiel dans une première couleur avec une directionnalité; et
commander une opération d'extinction séquentielle qui éteint chacune de la pluralité de zones d'émission de lumière dans un second ordre séquentiel avec une directionnalité, ledit au moins un processeur (170) étant en outre configuré pour:
commander, sur la base de chacune de la pluralité de zones d'émission de lumière étant séquentiellement allumée dans la première couleur, une taille de la pluralité de zones d'émission de lumière pour être différente pendant l'opération d'allumage séquentiel, **caractérisé en ce que**
sur la base de chacune de la pluralité de zones d'émission de lumière étant séquentiellement allumées dans la première couleur, une taille de la pluralité de zones d'émission de lumière est commandée pour qu'elle soit progressivement plus petite pendant l'opération d'allumage séquentiel.

2. Luminaire (100) selon la revendication 1, dans lequel ledit au moins un processeur (170) est configuré pour commander, en correspondance avec l'opération d'allumage séquentiel ou l'opération d'extinction séquentielle de chacune de la pluralité de zones d'émission de lumière, une intensité lumineuse d'une zone de la source surfacique de lumière qui exclut chacune de la pluralité de zones d'émission de lumière.

3. Luminaire (100) selon l'une quelconque des revendications 1 et/ou 2, dans lequel l'unité de sortie optique (150) comporte une pluralité de sources surfaciques de lumière, et chacune de la pluralité de zones d'émission de lumière une région d'au moins une de la pluralité de sources surfaciques de lumière.

4. Luminaire (100) selon l'une quelconque des revendications 1 à 3, dans lequel ledit au moins un processeur (170) est en outre configuré pour:
commander, sur la base de chacune de la pluralité de zones d'émission de lumière étant séquentiellement éteinte, une taille de chacune de la pluralité de zones d'émission de lumière pour qu'elle soit différente pendant l'opération d'extinction séquentielle.

5. Luminaire (100) selon la revendication 4, dans lequel ledit au moins un processeur (170) est en outre configuré pour:
commander, sur la base de chacune de la pluralité de zones d'émission de lumière étant séquentiellement éteinte, les tailles de la pluralité de zones d'émission de lumière pour qu'elles soient progressivement plus grandes pendant l'opération d'extinction séquentielle.

6. Luminaire (100) selon l'une quelconque des revendications 1 à 5, comprenant en outre une interface (130) configurée pour recevoir des informations sur l'environnement du voyage du véhicule, ledit au moins un processeur (170) étant en outre configuré pour commander, selon les informations sur l'environnement du voyage du véhicule, une intensité de sortie de lumière à partir de l'unité de sortie optique.

7. Luminaire (100) selon l'une quelconque des revendications 1 à 5, comprenant en outre une interface (130) configurée pour recevoir des informations sur l'environnement du voyage du véhicule, ledit au moins un processeur (170) étant en outre configuré pour commander, selon les informations sur l'environnement du voyage du véhicule, une période d'allumage séquentiel de chacune de la pluralité de zones d'émission de lumière dans la première couleur ou une période d'extinction séquentielle de chacune de la pluralité de zones d'émission de lumière.

8. Luminaire (100) selon l'une quelconque des revendications 1 à 7, comprenant en outre une unité d'entrée (120), ledit au moins un processeur (170) étant en outre configuré pour, sur la base d'une réception d'une entrée pour opérer une lampe de secours par l'intermédiaire de l'unité d'entrée et après une période d'allumage séquentiel de chacune de la pluralité de zones d'émission de lumière dans la première couleur ou une période d'extinction séquentielle de chacune de la pluralité de zones d'émission de lumière : commander un clignotement de toutes les zones de la pluralité de zones d'émission de lumière.

9. Luminaire (100) selon l'une quelconque des revendications 1 à 7, comprenant en outre une unité d'entrée (120), ledit au moins un processeur (170) étant en outre configuré pour, sur la base d'une réception d'une entrée pour opérer une lampe de secours par l'intermédiaire de l'unité d'entrée, commander un clignotement de l'ensemble de la pluralité de zones d'émission de lumière à un moment de réception de l'entrée.
